(19) Europäisches Patentamt / European Patent Office / Office européen des brevets

(11) **EP 2 791 221 B1**

(12) **EUROPEAN PATENT SPECIFICATION**

(45) Date of publication and mention
of the grant of the patent:
**01.11.2017 Bulletin 2017/44**

(51) Int Cl.:
*C08J 5/18* (2006.01)     *B29C 55/04* (2006.01)
*C08L 67/02* (2006.01)     *C08L 69/00* (2006.01)

(21) Application number: **12801462.8**

(22) Date of filing: **13.12.2012**

(86) International application number:
**PCT/EP2012/005136**

(87) International publication number:
**WO 2013/087200 (20.06.2013 Gazette 2013/25)**

(54) **UNIDERECTIONALLY-ORIENTED FILMS COMPRISING THERMOPLASTIC POLYESTERS**

EINACHSIG AUSGERICHTETE FOLIEN MIT EINEM THERMOPLASTISCHEN POLYESTER

FILMS ORIENTÉS UNIAXE COMPORTANT UN POLYESTER THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2011 EP 11009909**

(43) Date of publication of application:
**22.10.2014 Bulletin 2014/43**

(73) Proprietors:
• **Saudi Basic Industries Corporation**
  **11422 Riyadh (SA)**
• **Starlinger & Co. Ges.m.b.H.**
  **1060 Wien (AT)**

(72) Inventors:
• **BASHIR, Zahir**
  **Riyadh (SA)**
• **LOHMEIJER, Johannes Hubertus**
  **NL-4612 PX Bergen op Zoom (NL)**
• **FÜRST, Herbert**
  **A-1060 Vienna (AT)**
• **KRAUS, Robert**
  **A-1060 Vienna (AT)**

(74) Representative: **Sabic Intellectual Property Group**
**Sabic Intellectual Property Department**
**P.O. Box 3008**
**6160 GA Geleen (NL)**

(56) References cited:
**GB-A- 2 425 127     JP-A- 56 034 428**
**US-A- 4 515 925**

• **DATABASE WPI Week 198408 Thomson Scientific, London, GB; AN 1984-045642 XP002691074, & JP 59 006249 A (DIA FOIL) 13 January 1984 (1984-01-13)**
• **DATABASE WPI Week 198850 Thomson Scientific, London, GB; AN 1988-358596 XP002671497, & JP 63 270760 A (IDEMITSU PETROCHEM CO) 8 November 1988 (1988-11-08)**
• **DATABASE WPI Week 198631 Thomson Scientific, London, GB; AN 1986-202312 XP002671498, & JP 61 135728 A (DIAFOIL CO LTD) 23 June 1986 (1986-06-23)**

**Description**

The invention relates to an unidirectionally-oriented film comprising a thermoplastic polyester, to a process for the preparation of said film and to use of said unidirectionally-oriented film.

Unidirectionally-oriented films of polyethylene terephthalate are disclosed in US3627579. However, as explained in column 1, lines 43-53 of US3627579 such film when oriented only unidirectionally as by stretching the film in only one direction of its two major perpendicular planar axes or direction, lacks dimensional stability on heating (due to shrinkage) thereto, the film fibrillates, i.e. splits along the direction of stretching.

US2008/0214701 discloses a thermoplastic moulding composition comprising A) from 10 to 99.9% by weight of polyethylene terephthalate; B) from 0.01 to 50% by weight of B1) at least one highly branched or hyperbranched polycarbonate with an OH number of from 1 to 600 mg KOH/g of polycarbonate, or B2) at least one highly branched or hyperbranched polyester of $A_xB_y$ type; where x is at least 1.1 and y is at least 2.1 or a mixture of these; and C) from 0 to 60% by weight of other additives,
where the total of the percentages by weight of components A) to C) is 100% for production of fibres or liquid containers. However, production of unidirectionally-oriented PET films with hyperbranched polycarbonates is not disclosed in US2008/0214701. Furthermore, in the case of uniaxially oriented PET filaments or fibres (typically 10-20 $\mu$m in diameter) mentioned in US2008/0214701, tearing and axial splitting is not generally observed. As the transverse dimension becomes small, the chance of off-axis loading becomes lower. Whereas with unidirectionally-oriented tape, strap and film, off-axis loading is easily possible and tearing in the MD can occur anywhere along the width.

US4515925 discloses films comprising 50-90 wt% polycarbonate and 10-50 wt% polybutylene terephthalate. US4515925 does not relate to reduction of splitting of tape during processing, e.g. during winding on bobbins.

Biaxially oriented polyethylene terephthalate (BOPET) film as disclosed for example in US3720732 does not have the problem of splitting along the direction of stretching. BOPET (film) has outstanding properties in terms of strength (In BOPET film, the PET has strength of only about 250 MPa along the machine direction (MD) and traverse direction (TD)), impact and puncture strength, and has excellent transparency and gloss. However, the machinery to make BOPET film is extremely expensive. Further, not every application needs strength in two directions.

WO03/087200A1 describes that unidirectionally-oriented PET straps have a tendency to split in end use when the polyester strapping is pulled tight in the axial direction, which results in necking and bending stresses in the lateral direction. This leads to axial cracks ranging from a few centimetres to one metre or more. WO 03/087200 teaches that the polyester strap can be made resistant to splitting by using 0.2 to 2.8 wt% of polyolefins as additives. Other documents, such as US6210769 disclose adding elastomeric additives to reduce film splitting.

Unidirectionally-oriented films comprising thermoplastic polyesters and polycarbonates are also known in the art; however, the prior art discloses films made of compositions in which the polycarbonate is added as the major component in the polycarbonate-polyester blends. For instance, Document US4515925 discloses mixtures of 50-90 wt% polycarbonates and 10-50 wt% polybutylene terephthalate to produce films that can be monoaxially stretched. JP56034428A discloses making uniaxially stretched films that contain polyethylene terephthalate (PET) as the minor component (10-50 wt%) and polycarbonate (PC) and/or polystyrene; however, the PC-PET compositions in which PET is in minor amount are known to be less or even not compatible or miscible, this resulting in hazy or opaque films. Document GB2425127A discloses making a transparent shrink film from a polycarbonate-polyester resin blend. This document teaches that amorphous compositions with a single Tg can only be obtained if 0.1 - 40 mol% of 1,4-cyclohexanedimethanol (1,4-CHDM) comonomer is added in the polyester resin. Furthermore, GB2425127A generally discloses that the polycarbonate may be added in the blend in an amount between 1 and 99 mass%; however, this document actually shows that transparent sheets having good flowability and impact are obtained when polycarbonate is added in major amounts (e.g. 75-95 mass%) and PET in minor amount (e.g. 5-25 mass%); the oriented films obtained from said blends shrink to a high extent, i.e. more than 20%. Liquid crystal films or displays are also known in the art to be made from PC-PET compositions. For instance, document JP61135728A describes unidirectionally-oriented film of a PC-PET blend for use as the reflective film layer in a liquid crystal display (in computer monitors etc.); and document JP63270760A discloses a liquid crystal film made of a mixture of a polyester resin (2-50 wt%) and a polycarbonate (98-50 wt%). The reflective films used in LCDs are generally white as their purpose is to reflect light and make the screen look uniformly lit; and this is generally achieved with PC-PET compositions which are less or even not compatible or miscible, in which the polycarbonate is in major amount.

Therefore, it is an object of the invention to provide an unidirectionally-oriented film comprising thermoplastic polyesters that are less prone to splitting and less prone to tearing in the machine direction and/or have good optical properties.

This object has been achieved by an unidirectionally-oriented film comprising a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition.

Is has surprisingly been found that with the films of the invention, splitting and tearing in the machine direction hardly occurs and/or the films obtained have good optical properties.

Additional advantages of the unidirectionally-oriented films of the invention may be that high tensile moduli (e.g. in the range from 10 to 20 GPa) and/or high strengths (e.g. of at least 700 MPa) and/or low shrinkage may be achieved. Furthermore, the thermoplastic polyester and the polycarbonate form a compatible blend (even if not fully miscible) due to the polycarbonate being present as the minor component, resulting in a film having good optical properties, such as low haze (high transparency). In addition, the optical properties, such as the transparency and/or gloss of the films of the invention may be adjustable.

A film is herein understood to mean a flat elongated body with a rectangular cross section (as opposed to a fibre or filament which has a circular or ellipsoidal cross section), and includes a body which can be referred to as a wide film, a tape or a strap. The term 'film' includes a body of which the length dimension (machine direction) is much greater than its cross section dimension, as well as a body which does not necessarily have a larger length dimension (machine direction) compared to the longer axis of the cross section. The longer axis of the cross section is referred to as width and the shorter axis of the same, perpendicular to the width direction, is referred to as thickness. The width direction of the film prior to uniaxial stretching corresponds to the width direction of the extrusion slit and the thickness direction of the film prior to uniaxial stretching corresponds to the gap length direction of the extrusion slit.

The film as used herein has a width of at least 0.5 mm and of at most 10 m and a thickness in the range from 2 to 2000 $\mu$m, preferably at most 1000 $\mu$m.

A wide film is defined herein as a film having a width of more than 0.2 m or more than 0.5 m and for example of at most 5 m or at most 10 m and a thickness between 5 $\mu$m to 500 $\mu$m. The thickness refers to the final, unidirectionally-drawn wide film and not the cast film (unless explicitly stated otherwise herein).

A tape as used herein is understood to mean a body whose thickness is very small in relation to its length and width. Typically the width of a tape is between 50-100 times larger than its thickness.

A tape as used herein, preferably has a width of at least 0.5 mm and less than about 100 mm and a thickness in the range from about 5 $\mu$m to about 1000 $\mu$m. The thickness refers to the final, unidirectionally-drawn tapes and not the precursor tapes slit from the cast film (unless explicitly stated otherwise herein).

Unidirectionally-oriented weaving tapes are typically strips of a film that are lower in thickness and width than a strap. Preferably, for use in weaving, the width of the film, according to the present invention is at least 0.7 mm; for example at least 0.8 mm; for example at least 0.9 mm; for example at least 1 mm and/or at most 50 mm; for example at most 35 mm; for example at most 30 mm; for example at most 25 mm; for example at most 20 mm; for example at most 12 mm; for example at most 10 mm; for example at most 7 mm; for example at most 5 mm; for example at most 3 mm; for example at most 2.5 mm, for example at most 2 mm.

For example, for use in weaving, the thickness of the film, e.g. tape according to the invention is at least 5 $\mu$m or at least 7 $\mu$m; for example at least 10 $\mu$m; for example at least 15 $\mu$m; for example at least 20 $\mu$m; for example at least 22 $\mu$m; for example at least 25 $\mu$m; for example at least 30 $\mu$m; for example at least 50 $\mu$m, for example at least 55 $\mu$m and/or at most 300 $\mu$m; for example at most 250 $\mu$m; for example at most 100 $\mu$m; for example at most 80 $\mu$m; for example at most 70 $\mu$m, for example at most 60 $\mu$m.

A film having a width of at least 0.5 mm, preferably at least 0.7 mm and at most 15 mm and a thickness of at least 5 $\mu$m and at most 300 $\mu$m is also referred to herein as 'weaving tape'.

The weaving tapes of the invention preferably have tenacities of higher than 4 g/denier; preferably higher than 7 g/denier; most preferably higher than 7.5 g/denier (tensile strength of 945 MPa) and/or a low shrinkage. The tenacity as used herein is the tenacity as measured according to ISO2062 (DIN 53834) on Basic Line from Zwick/Roell, with a 500 mm free clamping length for the tape, and a testing speed of 250 mm/min.

A film having a width in the range from 0.5 cm to 2 cm and a thickness of more than 300 $\mu$m and preferably less than 2000 $\mu$m, more preferably less than 900 $\mu$m is referred to herein as 'strap'. The thickness refers to the final, unidirectionally-drawn strap, and not that of the undrawn precursor strap (for instance when it is made by extrusion from a die or slit from a thick sheet).

'Unidirectionally-oriented' means the thermoplastic polyester film that has been stretched preferentially along one direction [the machine direction (MD)], with or without any lateral restraints. If the unidirectional stretching is done without lateral constraints, the result is uniaxial orientation. Phenomenologically, it is observed under uniaxial drawing with no lateral constraint (which leads to uniaxial orientation), the film elongates along the MD usually through a sharp neck, and decreases in thickness and width. Uniaxial orientation may also occur through taper drawing where the width and thickness reduction occur gradually, rather than through a sharp neck. Uniaxially-oriented polyethylene terephthalate (PET) will have the crystal c-axis preferentially oriented parallel to the MD with the other two crystal axes placed randomly with respect to the MD axis. Uniaxially-oriented heat-set PET film will show a similar X-ray diffraction pattern as uniaxially oriented heat-set PET filament or fibre. If unidirectional drawing takes place with lateral constraints, uniplanar orientation occurs. Here, the term 'unidirectionally-oriented' is used to mean both uniaxial and uniplanar orientation, resulting from drawing in the machine direction. There are other types of drawing also possible for polymer films. There is biaxial orientation, where the film is stretched in two orthogonal directions (MD and transversal direction (TD)), either sequentially or simultaneously; different combination of draw ratios in the MD and TD can be imposed.

The invention also relates to an unidirectionally-oriented film made of a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition.

The total of the percentages by weight of components (a), (b) and (c) is 100 %.

Thermoplastic polyesters are essentially linear polymeric molecules containing ester groups in their chemical structure and are known to be truly versatile materials, being commonly used as fibers, plastics and films; in composites and elastomers; and as coatings. The production of polyesters by condensation of polyfunctional carboxylic acids with polyfunctional alcohols (or their ester-forming derivatives) is well known in the art, and is described in *e.g.* Encyclopaedia of Polymer Science and Engineering, 2nd ed., volume 12, John Wiley and Sons, New York, 1988. The most common thermoplastic polyester is polyethylene terephthalate (PET); this polyester is the cheapest and is industrially produced on a large scale. It is mainly used in industry for production of textile fibres, filaments, films and bottles.

The thermoplastic polyester may be a crystallisable polyester derived from at least one alcohol-based compound and at least one carboxylic acid-based compound.

The carboxylic acid-based compound may be a carboxylic acid or an ester-forming derivative thereof, like an ester, especially an alkyl- or hydroalkyl-ester, or acid chloride. Preferably, a dicarboxylic acid of the formula HOOC-R-COOH, wherein R is a - linear or branched - alkyl group, an arylene group, an alkenylene group or a combination thereof is used as carboxylic acid-based compound. Preferably, R has about 2 to 30, preferably about 4 to 15 carbon atoms. Suitable examples of carboxylic acid compounds may include saturated aliphatic dicarboxylic acids such as oxalic acid, malonic acid, succinic acid, glutaric acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimeric acid; unsaturated aliphatic dicarboxylic acids such as fumaric acid, maleic acid, and itaconic acid; and aromatic dicarboxylic acid such as orthophthalic acid, isophthalic acid, terephthalic acid, 5-(alkali metal)sulphoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4,-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracene dicarboxylic acid. Other dicarboxylic acids, and minor amounts of polycarboxylic acids or hydroxycarboxylic acids may also be used as constituent components.

More preferably, the carboxylic acid-based compound is at least one compound selected from the group comprising terephthalic acid, isophthalic acid, naphthalenic diacid, succinic acid, adipic acid, phthalic acid, glutaric acid, oxalic acid, and maleic acid. Most preferably, the carboxylic acid compound is terephthalic acid or naphthalenic diacid.

The alcohol-based compound may be a hydroxy-functional compound or an ester-forming derivative thereof, like an ester of a lower aliphatic carboxylic acid, such as acetic acid. Preferably, the alcohol-based compound is a bifunctional alcohol, like an alkylene glycol of the formula HO-R'-OH, a polyalkylene glycol having the formula HO-[R"-O-]$_n$-H or combinations thereof, wherein R' is an alkylene group, linear or branched, having 2 to about 10, preferably 2 to 4 carbon atoms, and wherein R", being the same or different, is an alkylene group having 1 to about 10, preferably 1 to 5 carbon atoms. Suitable examples of the alcohol-based compound include aliphatic glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, cis 1,4-cyclohexanedimethanol, trans 1,4-cyclohexanediethanol, 1,10-decamethylene glycol, 1,12-dodecanediol, polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols. Preferably, the alcohol-based compound is at least one compound selected from the group comprising ethylene glycol, 1,3-propylene glycol, 1,4-butylene glycol, and 1,4-cyclohexanedimethanol; and more preferably, ethylene glycol.

Small amounts of polyhydric alcohols may also be used to prepare the polyester in combination with these glycols. Suitable examples of polyhydric alcohols are trimethylolmethane, trimethylolethane, trimethylolpropane, pentaerythritol, glycerol, and hexanetriol. The hydroxycarboxylic acids may also be used in combination. Examples of hydroxycarboxylic acids may include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid and their esterforming derivatives. Also, cyclic esters in combination may be used in present invention. Examples of cyclic esters include ε-caprolactone, β-propiolactone, β-ethyl-β-propiolactone δ-valerolactone, glycollide, and lactide.

The initial molar ratio of the carboxylic acid-based compound and the alcohol-based compound (that is the ratio when preparing the polyester) may be in the range of about 1:1 to about 1:3, preferably 1:1.2 to 1:2. Optimum ratio generally depends on reaction temperatures and time.

Terephthalic acid and ethylene glycol are the most preferred starting compounds for the thermoplastic polyester, according to the present invention, in which case, the resulting polyester is PET.

Any suitable comonomer may be optionally contained in the thermoplastic polyester, such as isophthalic acid; 1,4-cyclohexane dimethanol; branching comonomers, such as pentaerythritol or pyromellitic dianyhdride; and/or mixtures thereof. Preferably, isophthalic acid comonomer may be contained in the thermoplastic polyester component of the film according to the present invention. Said comonomers may be contained in an amount of up to about 20 mol%, preferably about 1 to about 10 mol% or about 1 to about 5 mol%.

Suitable thermoplastic polyester component of the film according to the invention preferably have a molar mass that results in a melt viscosity that allows easy and stable extrusion, and which results in a desired level of mechanical properties of products, as known to a skilled person.

Typically, an indication for the molar mass of thermoplastic polyesters is derived from measuring the viscosity of diluted solutions; for example expressed as Intrinsic Viscosity (I.V.). Polyesters suitable for use in the films of the invention preferably have an I.V. in the range of about 0.5 dUg to about 2.5 dUg. A certain minimum I.V. is desired for extrudability and a higher I.V. generally results in better mechanical properties, but a too high viscosity may hamper processing behaviour. Thus, the I.V. of the polyester is preferably at least 0.50, for example at least 0.55, for example at least 0.6, for example at least 0.65, for example at least 0.7 dUg, and/or at most 2.0, for example at most 1.8, for example at most 1.6, for example at most 1.2 dUg, measured in phenol-1, 2 dichlorobenzene, at 25°C.

As used herein, the I.V. is determined by measuring the relative viscosity with a solution of the polyester in a 3:2 mixture of phenol-1,2 dichlorobenzene solution at 25°C and calculating the I.V. using the Billmeyer equation (see experimental section).

Preferably, the thermoplastic polyester according to the present invention is a polyethylene terephthalate (PET), polybutylene terephthalate (PBT), polypropylene terephthalate, poly(1,4-cyclohexanedimethylene terephthalate), polyethylene naphthalate (PEN), polybutylene naphthalate, polypropylene naphthalate, and their copolymers, and among them, polyethylene terephthalate homopolymer and copolymers are particularly preferred.

Copolymers that contain at least 50 mol% and preferably, at least 70 mol% or even at least 80, for example at least 90, for example at least 95 or for example at least 98 mol% of the ethylene-terephthalate repeating units may be also employed in the (film according to) the invention. A suitable example is the standard bottle grade PET copolymers. Also, blends of various polyesters, such as copolymers of ethylene terephthalate with different comonomers having different intrinsic viscosities may also be used. For instance, a blend comprising about 50 wt% PET homopolymer and about 50 wt% copolymer of PET containing 2 wt% isophthalic acid comonomer may also be applied. Recycled polyesters or blends of polyesters, e.g. virgin PET with a recycled polyester, e.g. recycled PET, may also be used in the film, i.e. tape, strap or wide film according to the present invention, as the cost decreases. In the case of use of recycled PET, it is desirable to have exceedingly low amounts of polyvinyl chloride impurity. Particularly, a blend composition comprising PET homopolymer in an amount of from 50 wt% to 99 wt% and recycled PET in an amount of from 1 wt% to 50 wt% can be used in the film, i.e. tape, strap or wide film of the present invention, the amount of each blend component depending on the desired properties of the product obtained. The recycled PET having an I.V. of at least 0.70 dUg may be generally derived from recycled PET bottle flakes, and may contain for example isophthalic acid or 1, 4-cyclohexane dimethanol comonomer in various amounts, such as of from 0.3 wt% to 3 wt%.

Most preferably, the thermoplastic polyester is a polyethylene terephthalate homopolymer due to its low cost and good mechanical properties, such as high mechanical strength and low shrinkage. The PET homopolymer is generally known to be made by polycondensation of terephthalic acid and ethylene glycol comonomers and may contain less than about 3 wt% diethylene glycol comonomer formed in situ, preferably less than 1.5 wt%, and most preferably less than 1.2 wt%.

The thermoplastic polyester is preferably substantially free of moisture in order to avoid hydrolysis of the thermoplastic polyester during processing, which would result in loss of molecular weight and mechanical properties. The thermoplastic polyester may for example have up 50 ppm moisture; preferably, 10 ppm to 40 ppm; more preferably, 20 ppm to 30 ppm; and most preferably 10 to 15 ppm or less than 10 ppm. The moisture content can be estimated by the I.V. drop (the difference in I.V. of chips and cast film). This I.V. drop may be less than 0.05 dUg; preferably, less than 0.03 dUg; and most preferably, less than 0.02 dUg for a moisture content of less than 50 ppm. The polycarbonate and the other components (additives) may be optionally substantially free of moisture and are preferably dried before use in the invention.

Drying of the semi-crystalline thermoplastic polyester chips, the polycarbonate and the other components can be conducted in accordance with any known procedures. For instance, in vacuum ovens, double cone rotary vacuum dryers, fluidized bed dryers, hopper dryers, dry or hot air circulating, dehumidifying ovens, infrared heaters or twinscrew extruder systems with on-line venting may be used. The thermoplastic polyester component can be dried with dehumidified air (with a dewpoint of about -40°C) at temperatures of about 120°C to about 180°C for about 3 to 5 hours.

The thermoplastic polyester may be produced by any method known in the art, such as by melt polycondensation or melt polycondensation followed by solid state polycondensation. For melt polycondensation, a catalyst is used and for PET used in the invention, it is preferred to use antimony trioxide or antimony triacetate as the catalyst.

Esterification and polycondensation steps in such polycondensation reaction may be conducted at temperatures known to a skilled man; for example, PET esterification of the diol and diacid will be typically performed at about 230 to about 260 °C and PET polycondensation may be conducted at a temperature from about 270 to about 290 °C under reduced pressure.

The polycondensation may be conducted in a split operation, for example by employing first a melt-phase polycondensation step and a subsequent solid-phase or solid-state polycondensation step (SSP). The polycondensation reaction may be performed by any conventional route, such as solution polycondensation and melt polycondensation. Preferably, polycondensation is conducted in the melt phase under high vacuum in a batch process, until a desired intrinsic viscosity of the precursor polyester is obtained, in case of PET for example of about 0.5 to about 2.5 dUg. More preferably, polycondensation is conducted in the melt phase in a continuous process using a train of reactors in series for esterification and polycondensation. In a continuous PET process, for example, the ethylene glycol generated in the reaction can be optionally condensed and added back into the process.

A solid-state polycondensation (SSP) step may be conducted by applying any known techniques, for example it may be performed batch wise or in a continuous operation. The precursor polyester from melt polycondensation, typically having an I.V. of about 0.65 dUg, may be granulated or pelletized in any size and shape, and - preferably after crystallizing the pellets - may be subjected to solid-state polycondensation at a temperature between the glass transition temperature and the melting point of the polymer, thereby increasing the intrinsic viscosity of the polyester; in case of PET typically to a value of about 0.72 to 1.2 dUg. The SSP may be conducted in vacuum or by passing an inert gas stream like a nitrogen stream through the bed of pellets or granules, at a temperature in a range of about 180 to 230 °C. Various solid stating processes are known in the art; such processes are for instance described in US4064112 and US4161578.

The carboxyl equivalents of the polyester are preferably less than 45mval/kg (meq/kg), preferably less than 30mval/kg, most preferably less than 20mval/kg. The carboxyl equivalent is determined by determining the carboxyl number. The carboxyl number is the amount of KOH in mg per g of polyester, which is necessary to neutralize the carboxyl terminal groups of the polyester being tested. This method of determination is for example described by H. A. Pohl in Anal. Chem. 1954, Vol. 26, pp. 1614 to 1616. The glass transition temperature (Tg) and melting temperature (Tm) as used herein are determined using differential scanning calorimetry (DSC). In particular, via differential scanning calorimetry (DSC) on a Mettler Toledo, TA DSC821 , in $N_2$ atmosphere on a 10mg sample during the second heating curve, with a cooling and heating rate of 5°C/min.

For example, for polyethylene terephthalate homopolymer, the Tg is about 78°C and the $T_m$ is about 258°C. When comonomer is present in the polyethylene terephthalate, Tg and Tm values are lower.

It is clear to the skilled person that also mixtures of polyesters may be present in the unidirectionally-oriented film of the invention.

It was mentioned that the problem faced in the prior art with highly unidirectionally-oriented PET films is the tendency to split or tear down the MD axis. Also, the film can shatter in a brittle manner when subjected to a tensile impact force (sudden pulling along the tape axis), or a sudden twisting force. These deficiencies negate the exploitation of the otherwise excellent properties of unidirectionally-oriented polyester, e.g. PET films. It was found that addition of polycarbonate in minor amount (0.1 to 15 wt%) to a thermoplastic polyester (85 to 99.9 wt%) reduces the splitting tendency and imparts the impact toughness needed, without sacrificing too much the other valuable properties of unidirectionally-oriented thermoplastic polyester-based film. Amounts of polycarbonate lower than 0.1 wt% in the thermoplastic polyester-based composition provide unidirectionally-oriented films that are nor effectively protected against splitting; while amounts of polycarbonate higher than 15 wt% provide films in which much of polyesters's (PET) desirable properties are compromised (for example, loss of transparency; increased hot shrinkage).

Additional advantages of the unidirectionally-oriented films of the invention may be that high tensile moduli (e.g. in the range from 10 to 20 GPa) and/or high strengths (e.g. of at least 700 MPa) and/or low shrinkage may be achieved. Furthermore, the thermoplastic polyester and the polycarbonate form a compatible blend (if not even fully miscible) due to the polycarbonate being present as the minor component of between 0.1 wt% and 15 wt%, resulting in a film having good optical properties, such as low haze (high transparency). In addition, the optical properties, such as the transparency and/or gloss of the films of the invention may be adjustable.

Polycarbonates belong to a class of polymers formed by the reaction of a dihydric phenol and a carbonate precursor, in the presence of a suitable catalyst. Polycarbonates are commercially produced via two routes: interfacial polymerisation and melt-phase polymerization.

In interfacial polycondensation, a dihydroxy aromatic compound is reacted with phosgene in an aqueous-organic solution, mixed with an acid acceptor and an amine catalyst. Interfacial polycondensation leads to polycarbonate in powder form; this is then extruded through a pelletising extruder to make pellets. Alternatively, the method involves the interfacial preparation of chloroformate oligomers, which are then converted to high molecular weight polycarbonate by partial chloroformate group hydrolysis and polycondensation.

In the second polymerisation route, polycarbonates can be prepared from melt phase carbonate interchange reactions. In such a melt-phase process, a bisphenol and a diphenyl carbonate are brought together in the melt in a temperature range between 270 and 350°C, in the presence of a suitable met polymerisation catalyst. An oligomeric polycarbonate is formed with an average molecular weight between 2000-10,000 as determined by GPC, which can be relative to polycarbonate or polystyrene. The oligomer is converted to high molecular weight polycarbonate by raising the polymerisation temperature and applying vacuum.

The most common polycarbonate, for example that formed from the reaction of phosgene and the dihydric phenol 'bisphenol A' or from the reaction between a diarylcarbonate and bisphenol A, is especially useful in this invention. Besides phosgene, other suitable carbonate precursors include bishaloformates, or carbonate esters, like di(cyclo)alkylcarbonates or diarylcarbonates or mixtures thereof, while the dihydric phenols may be bisphenols.

Examples of dihydric phenols that can be used for the polycarbonates are bisphenols such as 2,2-bis(4-hydroxyphenyl) propane, more commonly known as bisphenol A, bis(4-hydroxyphenyl)methane, 2,2-bis(4-hydroxy-3methylphenyl)propane, 2,2 bis-(4-hydroxyphenyl)pentane, 4,4-bis(4-hydroxyphenyl)heptanes, 2,2-bis(4-hydroxy 3,5 dichlorophenyl)propane and 2,2-bis(4-hydroxy-3,5 dibromophenyl)propane; dihydric phenol ethers such as 4-hydroxyphenyl such as 4,4' dihydroxydiphenyl ether and 4,4' dihydroxy-2,5-diethoxydiphenyl ether; dihydroxyphenylbiphenyls such as 3,3'-dichloro-4,4'-dihydroxybiphenyl;. dihydroxyaryl sulphones such as bis-(4-hydroxyphenyl) sulphone, 2,4' dihydroxydiphenyl sulphone, bis-(4-hydroxyphenyl)diphenyl disulphone; dihydroxy benzenes such as hydroquinone or resorcinol; halo and alkyl substituted dihydroxybenzenes, such as 1,4-dihydroxy-2,5-dicholorobenzene and 1,4- dihydroxy-3-methylbenzene; dihydroxydiphenyl sulphides and sulphoxides such as 4-hydroxyphenyl sulphide and bis(4-hydroxyphenyl)sulphoxide; and polynuclear aromatic compounds such as 2,6 dihydroxynaphthalene. Other examples of suitable dihydric phenols include those disclosed in US 2,999,835, US 3,028,365, and 3,153,008.

Also, two or more different dihydric phenols may be used, as may a dihydric phenol and an aliphatic diol, a polyester terminated by a hydroxyl group or dibasic acid, to obtain a carbonate copolymer instead of a carbonate homopolymer.

Further branched polycarbonates may be added to make the unidirectionally-oriented film of the invention. The branching in the polycarbonate may be introduced through a comonomer during polycarbonate polymerisation. Branching agents generally are polyhydric phenols having three or more hydroxyl groups.

Examples of polycarbonate branching agents that can be used for interfacial polycondensation are 1,1,1-tris-(hydroxylphenyl) ethane (THPE). Other branching agents include cyanuric chloride; 3,3-bis-(4-hyrdroxyphenyl) oxyindoles; 1,2,3-trihydroxybenzene; 1,3,5-trihydroxybenzene; 1,3,5-tris(2-hydroxyethyl) cyanuric acid; 4,6-dimethyl-2,4,6-tris(4-hydroxyphenyl) heptane; 2,3,4-trihydroxyacetophenone; 2,3,4-trihydroxybenzophenone and 2,4,4'- trihydroxybenzophenone.

Branching agents that may be used in the melt phase process for polycarbonates include 1,1,1-tris-(hydroxylphenyl) ethane (THPE), triphenyl trimellitate, triglycidyl isocyanurate, and 3,3-bis-(4-hydroxyphenyl) oxyindoles.

It is clear to the skilled person that also mixtures of polycarbonates may be used in the unidirectionally-oriented film of the invention.

The absolute weight average molecular weight (Mw) and number average molecular weight (Mn) of polycarbonate as used herein are measured using Gel Permeation Chromatography (GPC) analysis of 1mg/ml solutions of the polycarbonate in methylenechloride versus polystyrene standards, and corrected for the differences in hydrodynamic volume.

The above class of linear polycarbonates may have an Mw in the range from 10,000 to 50,000 daltons as measured by Gel Permeation Chromatography (GPC). The ratio of Mw and Mn (Mw/Mn) is preferably in the range from 2 to 3.

The polycarbonates used are preferably amorphous; their glass transition temperature may be in the range of 140 to 160°C, for example about 150°C.

Recycled polycarbonates may also be used in the films of the present invention.

The amount of (a) thermoplastic polyester is from about 75 wt% to about 99.9 wt%, preferably from 85 wt% to 99.9 wt%, based on the total composition. Preferably, the amount of thermoplastic polyester is at least 78 wt%, based on the total composition; for example at least 80 wt%; for example at least 85 wt%; for example at least 90 wt%; for example at least 95 wt%, for example at least 96 wt% and/or at most 99.5 wt%; for example at most 99 wt%; for example at most 98.5 wt%; for example at most 98 wt%; for example at most 97.5 wt%, for example at most 97 wt%, based on the total composition.

The amount of polycarbonate (b) is for example at least about 0.1 wt%, for example at least about 0.5 wt%, for example at least about 1 wt%, for example at least about 2 wt% and/or at most about 15 wt%, for example at most about 10 wt%, based on the total composition. Preferably, the amount of polycarbonate (b) is from 0.1 wt% to 15 wt%, based on the total composition.

In the composition of the unidirectionally-oriented film of the invention, may also be present further components (c), such as for example additives, for example in the range from 0 to about 10 wt%, for example to about 5 wt%, for example to about 4 wt%, for example to about 3 wt%, for example to about 2 wt%, for example to about 1 wt% of other components based on the total composition.

Other components (c) may be any conventional additives as known to the skilled person, like stabilisers, such as heat-stabilizers, anti-oxidants, and ultraviolet light stabilizers; processing aids such as anti-blocking agents and electrostatic spinning agents; slip agents and colorants, both pigments and dyes; opacifiers; compatibilisers; and catalyst deactivators and mixtures of any one of these to reduce adverse reactions between the polyester and the polycarbonate. Anti-blocks may be added to reduce the tendency of the material to stick to itself e.g. on a tape bobbin or film roll.

A major application of the invention is in weaving tapes, which are used to make woven fabric, which in turn are used to make sacks or geotextiles for example. The length of the tape can be indefinite, as the weaving tapes are normally made with a continuous extrusion process. Tapes with a good rectangular cross section are obtained more easily and cheaply by slitting a wide film, rather than by extruding filaments with tape geometry. The article "Production of polyolefin tapes", F. Hensen, Man-Made Fiber Year Book (CTI), 45-48, 1992 reviews the technology for making uniaxially oriented polypropylene and polyethylene tapes. The process for uniaxially orienting polypropylene (PP) tapes comprises the steps of (1) extruding a wide film into a water bath or a chill roller; (2) slitting it into a plurality of tapes; (3) heating the tapes and stretching them simultaneously in an oven; (4) heat setting them at a higher temperature and (5) winding each unidirectionally-oriented PP tape on a bobbin.

Currently, the industrially established tape products for weaving are made from polypropylene (PP) and polyethylene (PE); the three main applications being high modulus tapes, weaving tapes, baler twines and rope strands (see F. Hensen, Man-Made Fiber Year Book (CTI), 45-48, 1992). It is also commonly recognised that PP is the dominant synthetic polymer for uniaxially oriented tapes from slit film; but high density polyethylene is also used. PP tape production has been established since the 1960s and occurs on a large scale world-wide. Weaving involves interlacing tapes to make a fabric. This can be done in a machine called a loom. There are generally two types of industrial looms: circular and flat. The high-performance circular loom has been specially designed to produce endless tubular or flat fabric from tapes. The warp tapes can be taken to the loom from two bobbin creels which guarantee equal warp tensioning, the best fabric quality and problem-free operation. During production, the warp bobbins can be changed and joined quickly and easily - without switching off the loom. The weft can be inserted by six shuttles which run in a reed designed for the purpose. The fabric width can be adjusted simply by changing the warp ring. The tubular fabric can be taken via a spreader system to a continuously-powered take-up roller and consequently wound up on a fabric winder. Preferably, tapes suitable for weaving (in a circular or flat loom) have a thickness of at most 300 $\mu$m, for example at most about 200 $\mu$m, for example at most about 120 $\mu$m. The tubular fabric is ideal for sacks, but it may be slit open if a flat fabric is desired. The flat loom produces a flat fabric instead of a tubular fabric. It is preferred for applications where great width is needed, a for example 7-10 m wide fabric. Carpet backing and geotextile fabrics are generally made in flat looms. The warp tape can be collected on a giant beam (as wide as the fabric width) by unloading regular tape bobbins. The weft tape can be fed into the loom from smaller bobbins; it can be fed to a tensioning unit and then inserted with a projectile as the warp tape advance through the machine from the beam. The tensioning unit for the weft tape typically exerts twisting forces on the tape and the projectile subjects the tape to high acceleration (hence high axial or tensile impact force). The warp tapes are generally not subjected to impact forces; pure PET tape can split and break during weft insertion in the flat loom because it is not tough enough to withstand the twisting and the projectile acceleration which subject it to tensile impact forces; this can stop the loom. The projectile flat loom in fact can be more severe than the circular loom and for universal weavability, therefore the PET tape should have the capability of being weavable on both circular and flat looms.

It is known that PET allows the possibility for obtaining higher tenacity (or specific tensile strength), higher modulus, better resistance to creep, transparency and gloss for the products made from it, compared with the products made of PP. Also, PET retains its mechanical properties to higher temperatures than PP. PP softens appreciably at 90°C and at 95°C, its tenacity is half that at 20°C. One factor that affects creep is the glass transition temperature $T_g$ and its relation to room temperature. For PP, $T_g$ is between -15 to 10°C, whereas for PET it is about 78°C. Another important aspect about PET is that it has the potential to be recycled with its properties restored. It is well known that polymers degrade and there is a decrease in molecular weight during melt extrusion. In the case of PP, if recycled, the molecular weight of the polymer cannot be re-built; whereas with PET, the molecular weight can be restored to the original value by melt or solid-state polycondensation. Thus, there is a desire to make PET tapes that can withstand the rigours of a weaving loom, especially a flat loom.

PET-based tapes were commonly known and have been industrially produced but exclusively for video and audio magnetic tape, although these have become obsolete. Such PET tapes were produced by slitting a biaxially oriented PET (BOPET) film. The method of production of BOPET film for audio tape is described by W. Goerlitz and A. Ito in "Substrates for flexible magnetic recording media: The role of base films for modern performance requirements", Journal of Magnetism and Magnetic Materials, volume 120, 76-82, 1993. However, making PET tape from BOPET film is very expensive and its application was thus limited to audio and video tapes. The BOPET tape process involves drying the PET resin, melt extrusion and casting of an amorphous film, biaxial stretching using a tenter frame that passes through a heated cabinet, followed by heat setting and then slitting the film into tapes. In the unidirectionally- drawn tape process, the stretching process involves drawing the tapes through a heating cabinet, between rollers. In the BOPET line, the tenter frame for effecting the transverse direction (TD) draw raises the cost of the machinery to about 10 times that of a unidirectionally-drawn tape process. BOPET film is tough and can resist tensile impact forces along the MD and TD. The tapes made from BOPET film are thin enough to be woven into a fabric, and although they would weave well in a loom, it has never been done commercially, as it is prohibitively expensive and not cost-competitive with tape fabric made from uniaxially oriented PP tapes.

Therefore, use of unidirectionally-oriented polyester, particularly PET tapes would be advantageous and allows applications not possible with PP tape fabric, as well as be cost competitive with PP for making woven tape fabrics, if the problems of tape splitting during secondary operation (weaving in the loom) can be solved.

However, when using unidirectionally-oriented tapes of pure thermoplastic polyester, e.g. pure PET, the tape shows (1) sticking tendency after slitting (2) high polyester-polyester (PET-PET) friction during bobbin winding, leading to dog-bone shaped bobbins (3) formation of cotton-like fluff in the loom during weaving. The use of polycarbonate as minor component in the thermoplastic polyester - polycarbonate mixture and additives, such as anti-block agents eliminates all three problems encountered with the production and weaving of polyester-based tapes, and allows continuous operation for long times, and further allows the tape to retain transparency.

An anti-blocking agent is defined herein as material that reduces the blocking and sticking of films, such as tapes, for instance immediately after slitting. This is measured by putting two films of the invention further comprising the anti-blocking agent on top of one another and pulling the top one vertically and measuring the force to induce separation.

Generally, anti-blocking agents are particulate materials, which leave protrusions on the film surface thereby creating an air layer, when (two) film layers are on top of one another, but they can also be of a non-particulate nature. Examples of anti-blocking agents are known to the person skilled in the art and include but are not limited to calcium carbonate, titanium dioxide, barium sulphate, pentaerythritol tetrastearate, silica, silicone oil, polyolefin polymers and oligomers, e.g. linear low density polyethylene, fluorinated polymers and copolymers and the like and mixtures thereof.

For applications where transparency is required, in case additives are used, the films of the invention, preferably unidirectionally-oriented wide films or tapes, preferably further comprise transparent additives, for example a transparent anti-blocking agent, such as for example barium sulphate or silica.

The amount of anti-blocking agent may for example be chosen in the range from 0 to about 10 wt%, for example to about 5 wt%, for example to about 4 wt%, for example to about 3 wt%, for example to about 2 wt%, for example to about 1 wt%, based on the total composition.

For unidirectionally-oriented films, particularly weaving tapes, especially when transparency is not particularly desired, a linear low density polyethylene can be used as anti-blocking agent since linear low density polyethylene reduces the sticking tendency after slitting and reduces the friction during bobbin winding, leading to bobbins having an improved shape. Furthermore, the presence of linear low density polyethylene in the film of the invention, e.g. weaving tape, makes it for instance possible to weave the tape at a high speed in the weaving loom.

Linear low-density polyethylene (LLDPE) as used herein as an anti-block is a substantially linear copolymer having short branches, namely comprising ethylene and a $C_4$-$C_{10}$ alpha-olefin co-monomer or a mixture (of at least two $C_4$-$C_{10}$ alpha olefin comonomers) thereof. The LLDPE may be an ethylene $C_5$-$C_{10}$ alpha olefin copolymer. Preferred alpha-olefin co-monomers include 1-butene, 1-pentene, 1-hexene, 1-heptene and 1-octene, known under IUPAC as but-1-ene, pent-1-ene, hex-1-ene, hept-1-ene and oct-1-ene respectively. More preferably, the alpha-olefin comonomer is 1-butene, 1-hexene and 1-octene.

The alpha-olefin co-monomer may be present in the LLDPE in an amount of about 1 to about 20 wt% based on the ethylene-alpha olefin copolymer, preferably in an amount of from about 3 to about 15 wt%. The LLDPE may be grafted with compatibilising reagents, for example with maleic anhydride or glycidyl methacrylate, in order to increase the compatibility of the polyolefin with the thermoplastic polyester, e.g. PET.

Any type of LLDPE known in the art may be used. The density of the LLDPE may range between 915 kg/m$^3$ and 940 kg/m$^3$. The melt flow index (190°C/2.16Kg) may range between 0.3 g / 10 min and 50 g / 10 min, preferably between 1 g/10 min and 10 g/10 min.

In a preferred embodiment, the invention relates to an unidirectionally-oriented films comprising a composition according to the invention, further comprising a slip agent.

It has been found that the presence of a slip agent in the film of the invention leads to better winding of the bobbins and hence to a better shape of the bobbins.

A slip agent is defined herein as a material that reduces the sliding friction for two layers placed on top of each other. This can be determined by measuring the friction when two film layers are placed on top of each other and one layer is slid horizontally across the other. Generally, slip agents are substances that migrate to the surface of the film.

Examples of slip agents are known to the person skilled in the art and include but are not limited to siloxane polymers and oligomers, fatty esters or amides, for example euracamide and oleamide.

The amount of slip agent may for example be chosen in the range from 0 to about 10 wt%, for example to about 5 wt%, for example to about 4 wt%, for example to about 3 wt%, for example to about 2 wt%, for example to about 1 wt% based on the total composition.

The anti-blocking agent may be present as the only additive, or may be used in combination with any other additive. The slip agent may be present as the only additive, or may be used in combination with any other additive.

The film of the invention, preferably the weaving tape, may also further comprise a composite additive, wherein the additive is a combination of an anti-blocking agent and a slip agent. For example, the additive may be a combination of the anti-blocking agent calcium carbonate and the anti-slip agent euracamide.

It is clear to the skilled person that a component may function as both an anti-blocking agent and a slip agent. An example of such component is LLDPE as described herein.

Preferably, the invention relates to an unidirectionally-oriented film, wherein the film has a width of at least 0.5 mm or 0.7 mm and at most 10 mm or 15 mm and a thickness of at least 5 $\mu$m, preferably at least 7 $\mu$m and at most 300 $\mu$m (also referred to herein as 'weaving tape').

In a special embodiment, the film according to the invention, preferably the weaving tape, comprises a composition consisting of 85 to 99.9 wt% of a thermoplastic polyester (a) based on the total composition; 0.1 to 15 wt% of a polycarbonate (b) based on the total composition and; 0 to 10 wt% of additives (c) based on the total composition; more preferably, said film comprises a composition consisting of 85 to 99.9 wt% of a thermoplastic polyester (a) based on the total composition; 0.1 to 10 wt% of a polycarbonate (b) based on the total composition and 0 to 15 wt% of additives (c) based on the total composition.

Without being bound by any theory, it was found that the weavability in the loom (without formation of cotton-like fluff) may be related to some tape properties established through the following empirical observations in the laboratory: tapes that crack when folded along the MD axis (tape folding test as described herein); that form splinters when pulled or yanked suddenly along the tape axis (tape yanking or tensile impact test as described herein); or which fail with splintering in a high speed tensile test (high speed tensile test as described herein), will also form cotton-like fluff in the loom. The weaving tapes may be suitable for high speed weaving in the loom (as evidenced by the weaving tests and/or a positive tape folding test, a tape yanking test and a high speed tensile test as described herein).

The invention also relates to a process for making the unidirectionally-oriented film according to the present invention comprising the steps of:

(a) extruding a composition consisting of 85 to 99.9 wt% of a thermoplastic polyester (a), based on the total composition; 0.1 to 15 wt% of a polycarbonate (b), based on the total composition; and 0 to 10 wt% of additive (c), based on the total composition, into a molten film;
(b) quenching the molten film of step (a) to obtain a quenched film;
(c) heating the quenched film of step (b) to obtain a heated film and
(d) drawing the heated film of step (c) in the longitudinal direction to obtain an uniaxially-oriented film; and
(e) heat-setting the uniaxially-oriented film formed in step (d); and optionally
(f) collecting the uniaxially-oriented film obtained in step (e) on a roll.

The film according to the present invention can have a width of at least 0.5 mm and for example of at most 10 m and a thickness in the range from 2 to 2000 $\mu$m, preferably at most 1000 $\mu$m.

The invention also relates to a preferred process for making the unidirectionally-oriented film according to the invention preferably having a width of at least 0.5 mm and at most 15 mm and a thickness of at least 5 $\mu$m and at most 300 $\mu$m ('weaving tapes') comprising the steps of

(a) extruding a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition into a molten film and quenching said film and
(b) slitting the film obtained in step (a) in the longitudinal direction to form a plurality of films with a width in the range of 2 to 30 mm;
(c) heating and subsequently drawing the obtained films of step (b) in the longitudinal direction to form unidirectionally-oriented films having a width of at least 0.5 mm and at most 15 mm and a thickness of at least 5 $\mu$m and at most 300 $\mu$m and
(d) heat-setting the unidirectionally-oriented films formed in step (c).

This process may further comprise the step of (e) collecting the unidirectionally-oriented films formed in step (d) onto bobbins typically with a suitable wind-up system, for example cross-winders.

The unidirectionally-oriented wide film may be collected onto rolls using conventional take up devices from the film industry.

The invention also relates to another preferred process for making the unidirectionally-oriented film according to the invention preferably having a width of at least 0.5 mm and at most 15 mm and a thickness of at least 5 μm and at most 300 μm ('weaving tapes') comprising the steps of

(a) extruding a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition into a molten film and quenching said film;
(b) heating and subsequently drawing the obtained film of step (a) in the longitudinal direction to form unidirectionally-oriented film having a thickness of at least 5 μm and at most 300 μm;
(c) slitting the unidirectionally-oriented film of step (b) into a plurality of unidirectionally-oriented films having a width in the range from 0.5 to 15 mm; and
(d) heat-setting the unidirectionally-oriented films formed in step (c).

This process may further comprise the step of (e) collecting the unidirectionally-oriented films formed in step (d) onto bobbins with a suitable wind-up system, for example cross-winders.

The invention also relates to another preferred process for making the unidirectionally-oriented films according to the invention preferably having a width of at least 0.5 mm and at most 15 mm and a thickness of at least 5 μm and at most 300 μm ('weaving tapes') comprising the steps of

(a) extruding a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition into a molten film and quenching said film;
(b) heating and subsequently drawing the obtained film of step (a) in the longitudinal direction to form unidirectionally-oriented film having a thickness of at least 5 μm and at most 300 μm;
(c) heat-setting the unidirectionally-oriented films formed in step (b); and
(d) slitting the unidirectionally-oriented films of step (c) into a plurality of unidirectionally-oriented films having a width in the range from 0.5 to 15 mm.

This process may further comprise the step of (e) collecting the unidirectionally-oriented films formed in step (d) onto bobbins with a suitable wind-up system, for example cross-winders.

The films ('weaving tapes') may be wound across the entire length of a flangeless cylindrical wind-up tube so that the crossing layers create a firm package, with as few gaps as possible and at the same time keeping the capacity of the bobbins to be unwound easily for subsequent processing. These films ('weaving tapes) are preferably supplied at constant speed, the spindle speed decreasing as the bobbin diameter increases. There are two winding methods generally known in the art, *i.e.* friction winding and cross-winding method, the later being preferred according to the present invention as it gives a more neat bobbin appearance. The number of cross-winding units matches the number of unidirectionally-oriented films ('weaving tapes') after slitting the cast amorphous film.

The quenching of step (a) in the process of making 'weaving tapes' is preferably done into an amorphous film. The plurality of films formed in step (b) is preferably amorphous. The unidirectionally-oriented films formed in step (c) are preferably semicrystalline.

The invention also relates to a preferred process for making the unidirectionally-oriented film according the invention preferably having a width in the range from 0.5 cm to 2 cm and a thickness of more than 300 μm and less than 2000 μm, preferably less than 900 μm ('straps') comprising the steps of

(a) extruding a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition, into a molten film and quenching said film;
(b) slitting the film obtained in step (a) in the longitudinal direction to form a plurality of films with a width in the range of 0.6 to 3 cm;
(c) heating and subsequently drawing the obtained films of step (b) in the longitudinal direction to form unidirectionally-oriented films having a width in the range of from 0.5 to 2 cm and a thickness of more than 300 μm and less than 2000 μm, preferably less than 900 μm; and
(d) heat-setting the unidirectionally-oriented films formed in step (c).

This process may further comprise the step of (e) collecting the unidirectionally-oriented films formed in step (c) onto bobbins with a suitable wind-up system, for example by using conventional take-up devices that allow parallel winding of polymer straps.

Preferably, the unidirectionally-oriented film according the invention preferably having a width in the range from 0.5 to 2 cm and a thickness of more than 300 $\mu$m and less than 2000 $\mu$m ('straps') can be prepared by a process comprising the steps of

(a) extruding a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition from a die into a chilled water bath to form multiple films (for example 5 to 10) with a width in the range of 0.6 to 3 cm and

(b) heating the films formed in step a) and

(c) subsequently drawing the obtained films of step (b) in the longitudinal direction to form unidirectionally-oriented films having a width in the range from 0.5 to 2 cm and a thickness of more than 300 $\mu$m and less than 2000 $\mu$m, preferably less than 900 $\mu$m and

(d) heat-setting the unidirectionally-oriented films formed in step (c).

This process may further comprise the step of (e) collecting the unidirectionally-oriented films formed in step (d) onto bobbins with a suitable wind-up system, for example by using conventional take-up devices that allow parallel winding.

The multiple films formed in step (a) in the process of making 'straps' are preferably amorphous. The unidirectionally-oriented films formed in step (c) are preferably semicrystalline.

Preferably, the extrusion step (a) may be carried out through a die (e.g. spinneret die with 1-10 slots corresponding to each strap), through an air gap (of few centimetres short), into a cold water bath to form amorphous solidified films with width in the range of 0.6 to 3 cm (also refer herewith as straps). Step (b) may be heating the extruded amorphous straps of step (a) done at a temperature above the Tg but below the cold crystallisation temperature of the polyester (80-130°C for PET). Heat-setting (step d) of the unidirectionally-oriented films formed in step (c) may be done by heating under tension between 170-250°C.

There can be more alternative processes to make straps, particularly thick straps. For instance, thick straps can be made from a slit-sheet process, wherein a wide thick sheet (about 1-2 m wide, and about 2-3 mm thick) may be extruded and cut into straps; the straps may be then heated between 80-140°C and drawn about five times and then heat-set under tension between 170-250°C. Alternatively, a thick sheet (about 2 mm thickness) can be extruded, heated between 80-140°C and drawn about five times to obtain a unidirectionally-oriented sheet, and then slit into straps of the appropriate final width and then heat set under tension between 170-25°C. Alternatively, a thick sheet (about 2 mm thickness) can be extruded, heated between 80-140°C and drawn about five times to obtain a unidirectionally-oriented sheet, and then heat set under tension between 170-250°C; afterwards, the heat-set unidirectionally-oriented thick sheet can be slit into unidirectionally-oriented straps of the appropriate final width. However, a slit-sheet process to make thick straps is not preferred because 2-3 mm thick polyester sheets are difficult to quench uniformly, leading to crystallisation of the core, which hinders drawability; further, such thick sheets are difficult to slit.

The polyester, e.g PET chips are generally dried in a dehumidified air drier so that the moisture content is less than 50 ppm using standard driers for PET. The drying temperature condition is typically 5 hours at 150°C.

The extrusion temperature may range from about 270 to about 300°C, preferably from about 275 to about 285°C. Higher temperatures are avoided to minimize degradation of the resin components. The polycarbonate and/or other additives (e.g. anti-block masterbatches) may be introduced as pellets from a masterbatch dosing unit. The masterbatch dosing unit could have a drier attached to the extruder to dry the polycarbonate and any other moisture containing additive. Melt mixing may be efficiently performed by using standard screw designs of the type conventionally used for polyester extrusion, that may have length to diameter ratios of at least 15:1 or internal mixers for example as described in Chapter 15 of book Polyethylene, 2nd edition, by A. Renfred, 1960, Illiffe of London.

Alternatively, the polycarbonate (and optionally additionally additives) may be pre-compounded into the polyester resin either by addition in the polyester melt condensation reactor, or it can be pre-compounded with a screw extruder with pelletiser. Thus, in this case the polyester with polycarbonate (and optionally additional additives) may be introduced into the extruder of the film casting line (for weaving tape process) or the extruder feeding the melt to the spinneret extruder (for straps).

The thermoplastic polyester component and the polycarbonate component can be used in any form according to the present invention, such as in the form of powder, pellets, granules, (bottle) flakes; preferably, they can be used in the form of pellets.

The thermoplastic polyester and polycarbonate can be added in the process according to the present invention in any order; at any time and in any conventional manner. For instance, the components may be added simultaneously or consecutively in the extruder or they can form a pellet pre-mixture or a pellet pre-blend, which may be then added in the extruder by using any known means, such as a dryer hopper; preferably, without substantial contact with the atmosphere in order to avoid absorption of moisture. The physical pre-mixture of the two polymer components employed in this invention can be obtained in any conventional manner such as by dry-mixing pellets of the polymer components, solution blending or any other known technique, such as by using Banbury mixers, roll mills, plastographs, and the like. The polycarbonate may also be incorporated during melt polymerisation of the polyester. Preferably, the thermoplastic polyester component is dried and then fed to the extruder, followed by adding polycarbonate component to the extruder, as putting polycarbonate pellets in the polyester drier may cause fouling due to its softening. In such case, conventional separate metering devices can be used for feeding the polycarbonate component to the extruder, such as a masterbatch dosing device. Preferably, the polycarbonate component is added to the extruder by using a masterbatch dosing device attached to the extruder.

The other components (c) may be added in the process according to the present invention in any order; at any time and in any conventional manner. Suitable examples include adding simultaneously the other components with the thermoplastic polyester or with the polycarbonate; or during polyester and polycarbonate polymerisation reactions; or in the extruder, as a second masterbatch; or they may be already present in the polycarbonate itself. Preferably, the other components (c) are added with the polycarbonate from the masterbatch dosing unit. Alternatively, the masterbatch carrier for the said components may be polycarbonate.

For the step of film casting, a flat film die may be used to extrude the polymer melt into a molten web or film, onto a chill roller to form an amorphous film. The dimensions of the die are chosen such as to give a desired thickness and width for the film, after drawing. In both cases, a 5-10 cm strip is trimmed from both edges (due to edge effects from the die, the thickness is greater at the edges) and the trims are ground and recycled back to the extruder.

Extrusion of the composition comprising a thermoplastic polyester and a polycarbonate is preferably done from a slot die of the desired dimension. The slot die can have a coat hanger design but it is designed for polyester so that the cast film shows no thickness variations (except for the edges which are trimmed) and there are no streaks in the cast film in the MD. The width of the die and molten film may vary widely, for example from 50 mm to 10000 mm, preferably from 100 to 5000 mm.

Quenching of the molten film or web (from the slot die) is preferably done at a temperature in the range from 20 to 50°C. Quenching can be carried out by using known methods; preferably the film is cast onto one or more cooled drum(s) or chilled roller(s), which are preferably polished, to better control surface smoothness of the film, at a temperature of about 10 °C to about 30 °C, preferably of about 12 °C to about 20 °C. The cast film may be pinned to the chill roller with a vacuum box and electrostatic pinning rods, so that the quenching of the film is uniform across its width. Quenching is done to bring the film to an amorphous state. The amorphous state in polyesters, e.g. in PET is typically characterised by a lack of three dimensional crystalline order, and the absence of spherulites. It is known that PET is in fact a crystallisable polymer that typically forms polycrystalline spherulites if the polymer melt is cooled slowly. However, if the melt is cooled quickly (quench-cooling), then the PET will be frozen into an amorphous state without order. An amorphous, pure-PET cast film is typically transparent, whereas if crystallisation has occurred due to poor quenching, the film can be hazy due to the formation of spherulites that scatter light. If the quenching is poor, then the inner core of the cast film may have spherulites, and their presence can make drawing difficult. Freshly-cast amorphous PET is typically ductile and can be drawn above the Tg to high draw ratios (5:1 to less than 7: 1); but if spehrulites are present, the film becomes brittle and is less drawable. The polycarbonate in the melt also typically forms amorphous domains embedded within the PET matrix. Thus, the cast film is composed of an amorphous PET matrix and amorphous PC domains. In some of the examples according to the invention, crystalline or crystallisable additives such as barium sulphate or LLDPE are added as anti-block agents; in this case, when the film is referred to as being amorphous, it is generally meant that the majority PET-component and the PC component are amorphous; the barium sulphate particles however are crystalline and the molten LLDPE domains crystallise and become embedded in the PET-PC film. Further, where an anti-block is added, although the PET component of the cast film is amorphous, the film may have haze due to the anti-block or other additives. For example, a quenched cast film made with a composition comprising 2 wt% PC, 5 wt% LLDPE and 93 wt% PET may appear hazy, although the PET component is amorphous.

To secure the highest draw ratio in the orientation process, the thermoplastic polyester phase of the film according to the invention is preferably substantially amorphous, having a crystallinity of at most 5%, as measured by the density method as described herein. The density of the amorphous thermoplastic polyester/polycarbonate mixture is about 1333 kg/m$^3$. Preferably, the thermoplastic polyester phase has less than 3% crystallinity, more preferably less than 2 or 1%, and most preferably has no measurable crystallinity and in this latter case the polyester phase is considered amorphous. Slitting of the cast film can be done by using any known methods in the art. For instance, the cast film can be pulled by rollers across an array of razor blades or rotary cutting knives. Other cutting techniques, such as slitting with lasers can be employed. The width of the undrawn tape can be adjusted by changing the blade spacing, and is generally adjusted in such a way to attain the final reduced film, e.g. tape width (after drawing). The preferred process for strap may extrude the strap directly from a spinneret die, but should a cast film be used to make straps, a similar slitting procedure with blades or knives may be applied as with weaving tape. If the final unidirectionally - oriented polyester film is wide, the slitting step may be optional.

The drawing step of the film is preferably conducted at a temperature above the glass transition temperature of the polyester, but preferably below the cold-crystallization temperature. This temperature is generally in the range from 80 to 140°C for PET.

Typical heating zones for the uniaxial drawing may include a hot air oven, a heated surface or other suitable means. The average residence time of the film in a heating zone may be from about 0.5 seconds to about 2 seconds. During uniaxial drawing, the heated film (tapes, straps, wide film) typically necks and draws; at the necking point, there may be a reduction in width and thickness, and this is characteristic of uniaxial drawing.

Uniaxial drawing of the amorphous film is preferably done till the limiting draw ratio is reached. The limiting draw ratio may be determined empirically by drawing till it breaks. For example, the limiting draw ratio of amorphous PET will generally be in the range from 5 to 7 times its original length, but the presence of other components (PC and anti-blocks) can change this somewhat.

Thus, in the process of the invention, the film may be drawn lengthwise, *i.e.* plastically deformed in the machine direction, at a draw ratio, *i.e.* the ratio of the length of the plastically deformed film in the direction of stretching to its original length in the same direction before stretching, of about 4.5:1 to about 7.5:1, preferably a draw ratio of at least 5:1; 5.3:1; 5.5:1 or 6:1 and at most 7:1; 6.5:1; 6.3:1; 6.2:1 or 6.1:1, to orient the film and increase the tensile strength and modulus thereof in the lengthwise direction. Higher draw ratios give higher modulus and strength/tape tenacity but too high a draw ratio would lead to breakage on line.

Preferably, temperatures of about 80 °C (the glass transition temperature of the homopolymer polyethylene terephthalate) to about 140°C are employed to facilitate stretching without breakage of the film obtained. Suitably, stretching may be conducted by passing the film through a hot air cabinet maintained at the drawing temperature (80-140 deg. C), which is placed between the feed rolls and take-up rolls, with the latter rotating faster than the former to provide the desired degree of stretching.

Drawing may be conducted in one or more steps to achieve a final draw ratio of about 4.5:1 to about 7.5:1. Preferably, drawing at a ratio of 5:0 to 6:1 is completed at about 85 °C to about 140 °C, preferably at about 90 °C to about 100 °C in a single step to attain the total draw ratio.

Preferably, drawing is performed at a production speed of higher than 100 m/min. Drawing is generally effected by guiding the film (i.e. tape, strap, wide film) of the invention first over a set of feed rollers and then over a set of draw rollers that are operated at higher speed, with heating of the film (i.e. tape, strap, wide film). In order to control variations in draw ratio, preferably drawing is effected with feed and draw rollers, the speed of which can be controlled in such way that speed fluctuations of at most about 1% occur, more preferably speed fluctuations are at most about 0.7; 0.5 or 0.3%. The feed rollers may be placed before the drawing oven. The take-up rollers may be placed after the drawing oven.

The take-up speed of the drawing rollers has to be faster than the feed rollers by a factor corresponding to the draw ratio desired. For example, if the film (i.e. tape, strap, wide film) has to be drawn with a draw ratio of 5:1, the take-up roller has to run five times faster than the feed roller. The take-up speed may be at least about 1 m/min, preferably at least about 2, 3, 4, 5, 10, 15, 20, 50, or even 100 m/min and up to about 600, 550, 500, 400, 350, 250 or 200 m/min. Too high a drawing rate may induce breakage. In the case of the tapes and straps, a plurality of tapes and straps are drawn through the oven simultaneously. For the wide film, only a single film is drawn.

After the drawing step, the films can pass continuously into a second oven that is the heat-setting oven and its purpose is to increase the crystallinity of the polyester, e.g. PET to render it shrinkage-stable for high temperature end-use. This oven can also be a hot air cabinet. The heat-setting of the unidirectionally-oriented films is done at a temperature in the range from 140 to 250°C, while the films are held under tension. Generally, a minimal draw ratio might be imposed by the take-up roller after the second oven, to keep the tension and prevent shrinkage and loss of orientation. During this process, the unidirectionally-oriented polyester crystallises further.

The step of heat-setting the unidirectionally-oriented films obtained can be performed off-line but is preferably done in-line, using equipment and applying conditions as known to a skilled person. The temperature for heat-setting is in the range of about 140 to about 250 °C; an additional low draw ratio, typically of about 1.05:1, is generally applied to prevent relaxation effects. Once heat-set, the unidirectionally-oriented film is stable and does not form ripples.

Following this, the films can be passed over some cooling rollers to cool them and then the unidirectionally-oriented heat-set films can be taken to the wind-up station. The tapes can be for instance collected on bobbins in a station with high speed cross winders, where the tape can be wound helically; in case of the straps, a system of parallel winding can be for instance used for the bobbins, where the sideways movement of the strap over the bobbin is typically over a small angle. The wide film may be for example wound on rolls with no lateral movement of the wide film during wind-up.

The unidirectionally-oriented films of the invention may further be subjected to one or more additional steps to establish other desired properties; like a chemical treatment step, a corona-treatment, or a coating step.

In another aspect, the invention relates to the use of the unidirectionally-oriented film of the invention.

For example, a weaving tape of the invention (width of at least 0.5 mm and at most 10 mm or 15 mm and a thickness of at least 5 $\mu$m and at most 300 $\mu$m) may be used for weaving fabric.

For example, a wide film of the invention (which is a film having a width of more than 0.2 m and for example at most 10 m, preferably film having a width of more than 0.2 m and for example at most 5 m) may be used for food packaging due to good transparency, gloss and gas barrier properties, in particular if the film further comprises a transparent anti-block agent such as for example barium sulphate or silica.

For example, a tape of the invention (which is a film having a width of at least 0.5 mm and less than about 100 mm and a thickness in the range from about 5 $\mu$m to about 1000 $\mu$m) may be used to make ropes, as audio magnetic tapes, metallic yarns and pressure sensitive adhesive tapes.

For example, a strap of the invention (which is a film having a width in the range from 0.5 cm to 2 cm and a thickness of more than 300 $\mu$m and less than 2000 $\mu$m, preferably less than 900 $\mu$m) may be used for binding cartons, boxes, pallets with bricks, textile bales etc.

Therefore, the invention also relates to use of the films of the invention, for example for food packaging, binding cartons, boxes, pallets with bricks, textile bales for weaving fabric; for making ropes, as audio magnetic tapes, metallic yarns and pressure sensitive adhesive tapes.

In another aspect, the invention also relates to fabric woven from the films according to the invention, in particular to fabric woven from weaving tape (width of at least 0.5 mm and at most 10 mm or 15 mm and a thickness of at least 5 $\mu$m and at most 300 $\mu$m) according to the invention.

In yet another aspect, the invention relates to the use of the woven tape fabric according to the invention, for example for sacks, flexible intermediate bulk containers (FIBC, jumbo bags), hot fill jumbo bags for materials such as bitumen, PVC coated fabrics for flex signage, carpet backing, geo textiles, geogrids, metallised fabrics, flexible electronics, and self-reinforced composites.

It is noted that the invention relates to all possible combinations of features recited in the description, including the combination of features recited in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will now be further elucidated by way of the following examples without however being limited thereto.

**Examples**

*Machine for making unidirectionally-oriented heat-set weaving tapes*

A PET line specially built for making weaving tapes was used.

The PET weaving-tape line consisted of the following elements : (1) PET drier (2) Extruder with wide slot die to cast film on chill roller (3) slitting razors to slit tapes or straps (4) heated godets feeding the slit tapes into the drawing oven (5) godet assembly to take the unidirectionally-drawn tapes into a heat setting oven (6) a godet assembly for annealing and cooling down the unidirectionally-drawn and heat-set tapes and (7) wind-up station with cross winders to collect each unidirectionally-oriented and heat set tape on separate bobbins.

For the strapping, although the preferred process is one where straps are extruded directly into water from a die block with 5-10 slot dies with similar dimensions as the strap, the straps can be made also by slitting a thick sheet into wider straps.

For the unidirectionally-oriented film, elements (1) - (2) of the line can be used; the slitters can be removed, and the cast film is passed through the drawing oven (4) and then into the heat-setting oven; the unidirectionally-oriented, heat-set films then have to be wound up on a film take-up device.

Further details of the weaving tape line are provided.

An industrial-scale line provided with a 90 mm extruder having a 1500 litres dehumidifying hot-air drier was used. The pellets were dried for 5 hours at 170°C. To bring in the additives such as the polycarbonate pellets and the anti-blocking agents, a side-feed masterbatch dosing unit was used alongside the feeding section of the extruder. A 800 mm wide slot die was modified with additional heating zones (250°C - 320°C) for casting polyester film. After draw down of the molten web in the air gap between the slot die and the rotating chill roller, the film width was reduced to 600 mm. The temperature of the chill roll is shown in Table 1. The molten web was cast on the chill roll (temperatures for the different experiments as shown in Tables 1, 4 and 5), to yield an unoriented amorphous film; this film was then moved forward to a slitting unit by passing over rotating rollers. Ceramic blades were used for slitting the cast amorphous film into 120 tapes at room temperature. The spacing between the blades could be adjusted to increase or decrease the width of the tapes, according to desire. The slit tapes were then passed by feed rollers into the first hot-air oven for drawing. The temperatures of the first hot-air oven for the different experiments are shown in Tables 1, 4 and 5. Beyond the first hot-air oven, an extended stretching unit equipped with oil heated godets was installed. The rollers of the stretching unit run about 5.1 x faster than the feed rolls and hence they impose the draw ratio; the tapes passing through the first drawing-oven placed between the feed and the drawing godets neck in the oven and draw unidirectionally, with an extension in length and reduction in thickness and width. After the drawing oven, the tapes pass to the heat-setting oven which operates at a higher temperature (the temperatures of the heat setting oven for the different experiments are shown in Tables 1, 4 and 5), and this causes the oriented thermoplastic polyester to crystallise further; a third godet unit (annealing unit) after the heat setting-oven maintained an even thermal stabilisation of the tapes. The crystallization and annealing of the oriented tapes will usually take a few seconds depending on the temperatures used. The last two godets of the annealing unit were water-cooled to cool the tapes before wind-up on bobbins. For taking up and spooling the finished tapes, 120 precision cross-winding heads were located next to the annealing unit. The line speeds for the different examples are shown in Tables 1, 4 and 5.

In Tables 4, 6 and 7, the grade name and source of the additives used in the examples are mentioned.

**Methods**

*Density*

Density of a film sample was measured in a density gradient column set up for the density range of conventional PET (1330 kg/m$^3$ to 1445 kg/m$^3$).

*Percentage crystallinity*

The percentage crystallinity $X_c$ was computed from density measurement with the equation:

$$Xc = \left(\frac{\rho_c}{\rho_{sample}}\right) \cdot \frac{(\rho_{sample} - \rho_a)}{(\rho_c - \rho_a)} \times 100$$

wherein $\rho_c$ = 1455 kg/m$^3$ for 100% crystalline PET, and $\rho_a$ = 1333 kg/m$^3$ is the density of amorphous PET.

Results: Typically, for a cast amorphous film of PET, $\rho_{sample}$ was between 1333 to 1335 kg/m$^3$; which translates to 0 - 1.8% crystallinity.

*Moisture content*

The PET pellets were dried in a dehumidified air drier (dewpoint of -40 °C) from Piovan (operating temperature = 170°C; residence time = 5 hours). The moisture content in the PET pellets was lower than 50 ppm.

The polycarbonate and other additives were used without drying, using the masterbatch dosing unit attached to the extruder.

*Intrinsic viscosity (I.V.)*

The I.V. was measured with a dilute solution of the polyester resin in a 3:2 mixture of phenol-1, 2 dichlorobenzene solution, at 25°C (single measurement). The I.V. was calculated from the measurement of relative viscosity $\eta_r$ for a single polymer concentration (c = 0.5%) by using the Billmeyer equation:

$$I.V.= [\eta] = 0.25 \, (\eta_r - 1 + 3 \ln \eta_r)/c$$

Results: The I.V. drop in the film (the difference in I.V. of pellets and cast film) was less than 0.03 dUg for all samples, which is typical of a process with good drying of the PET.

*Haze*

Haze is the percentage of the total transmitted light that after passing through a film sample is scattered by more than 2.5° (see ASTM D-1003-97). The haze was measured with Haze Gard Plus instrument from BYK Gardner on the cast amorphous film before tape slitting. Surface and bulk contributions were not separated.

Results: Table 2.

*Gloss*

Gloss of the cast amorphous films was measured at 60° using a gloss meter from Sheen. The results are given in GU (gloss units).
Results: Table 2

*Microscopy of oriented tapes*

The drawn tapes were examined by transmission electron microscopy (TEM) to examine the domain size of the additives like polycarbonate and anti-block agents such as LLDPE. To see the polycarbonate domains, the sectioned tapes were stained with ruthenium tetraoxide. The polycarbonate domains pick up the stain, and can be seen as elongated darker domains in the PET matrix. The results: most of the polycarbonates used formed 100-200 nm domains with fuzzy boundaries indicative of compatibilsation. Thus, polycarbonates did not form miscible blends even with 2%, but one can call them compatibilised blends. The LLDPE domains were micron sized on the other hand and they debonded from the PET during sectioning, leaving voids between particle and PET matrix; hence, the LLDPE is totally immsicible and incompatible.

*Tenacity and Elongation at break*

The tenacity and the elongation of the unidirectionally-oriented tapes was measured according to ISO 2062 (DIN 53834) on Basic Line Z005 from Zwick/Roell, with a 500 mm free clamping length for the tape, and a testing speed of 500 mm/min. The tensile strength can be calculated from the tenacity.

*Shrinkage*

Hot air shrinkage was measured by following ASTM D - 4974 - 93 and DIN 53866. The sample length was about 600 mm. One end of the sample was fixed in the hot air oven by means of a clamp. The tape rested freely on the drum (which was directly attached to the scale) and one of the prepared weights (1 g/100 den) was fastened to the other end of the tape. The distance from the drum to the weight was approximately 100 mm. The test temperature used was 130°C with an exposure time of 2 minutes. The residual shrinkage was indicated directly on the scale in percent.
Results: Table 4.

*Linear density (denier)*

Denier is the weight of 9000 m of tape or fibre. This characteristic was measured by using a Zwick/Roell Basilc Line Z2005 instrument.
Results: Tables 1, 4 and 5.

*Splitting tests*

**Folding test (along MD)**

A simple test to predict the tendency for the unidirectionally-oriented tape to split was to fold the tape along the machine direction (that is, along the tape axis). If there was no folding crease, the tape was considered suitable for further uses, such as for weaving. If there was a folding crease, but the tape was not broken, then weaving was considered possible. If there is breakage along the fold, than weaving was considered not possible.
Results: Pure unidirectionally-oriented PET tape splits with a cracking sound when folded. The tapes with the polycarbonate of the invention however do not split and in fact recover from the crease.

**Tape yanking test (along MD)**

Another simple, manual test was to wrap the unidirectionally-oriented PET tape in two hands and yank or tug suddenly the 25 micron thick, 3 mm wide tape, along the tape axis.
Results: Although the unidirectionally-oriented pure PET has a high tensile strength according to a conventional tensile test, it shatters and breaks if suddenly pulled in the axial direction; the broken ends have many splinters. That is, a pure PET tape has a poor tensile impact strength. The tapes of the invention cannot be broken at all with a sudden manual yank.

**High speed tensile test**

Another test is to examine the fracture surface of the tape in a tensile test at high speed. The tensile test for tenacity according to ISO 2062 (DIN 53834) was performed at the fastest speed attainable in the tensile testing machine (500 mm/min. or higher). , Results: Differences could be observed in the fracture surface of the pure PET tape and the tapes containing polycarbonate. The unidirectionally-oriented tape of pure PET broke with the formation of splinters and cracks running along the tape axis. The tapes with polycarbonate fractured in a ductile manner, with a horizontal break and no splinters; there was a little whitening near the broken ends.

**Weaving tests**

Finally, the behaviour of the unidirectionally-oriented tapes was tested in the circular weaving loom during weaving of the fabric. This is the ultimate performance test. In particular, the deposit of cotton-like fluff in various guides and eyelets was monitored, since these deposits stall the machine.

Not all tapes were tested in the circular weaving loom. However, the formation of cotton-like fluff during can be predicted if:

-    the tape cracks in the 'folding test' (as described above)
-    the tape forms splinters in the 'tape yanking test' (as described above)
-    the tape splinters in the 'high speed tensile test' (as described above)

One tape of the invention was also tested for weaving in a projectile flat loom. This loom has even more severe operating conditions than the circular loom. During the weft insertion, the tape is subjected to twisting and high tensile impact force.

Results: In the circular loom, unidirectionally-oriented tapes of pure PET led to the deposits of cotton-like fluff in various guides and eyelets through which the tape passes, due to a combination of friction and yanking motions. This stalls the weaving loom and hence the tapes are useless for weaving. With the projectile flat loom, even two consecutive weft tapes of pure PET could not be inserted due to splitting, which stops the loom.

Unidirectionally-oriented tapes of the invention performed well in the 'folding test', the 'tape yanking test' and the 'high speed tensile test'. Furthermore, it was determined in the circular weaving loom that unidirectionally-oriented tapes of the invention comprising polyester, polycarbonate and linear low density polyethylene did not lead to significant fluff formation and could therefore be woven at full weaving speeds. Likewise, a composition consisting of polyester, a minor amount of polycarbonate and a calcium carbonate anti-block could be woven in a projectile flat loom, where the tensile impact forces are even more severe.

**Comparative Example 1**

A bottle grade co-PET (I.V. 0.84 dUg with 1.6 wt% isophthalic acid) was used to cast a film and slit tapes. The cast film had an I.V. of 0.81 dUg. The cast film was 600 mm wide and 85 tapes were slit. The cast film thickness was chosen to be 60 $\mu$m such that after a draw ratio of 5.7:1, the drawn tape would have a thickness of about 25 $\mu$m; the width of the tape after slitting and before drawing was 7.2 mm, and after drawing, the width becomes 3 mm. The actual draw ratio, the tape thickness and width (after drawing) and the mechanical properties obtained are shown in Table 1.

Results: The tenacity (TEN) was 6.6 g/denier (= 809 MPa tensile strength). With optimisation, even higher tenacities can be obtained. However, bobbin wind-up was difficult leading to frequent line stoppages due to twinning of tapes. Further, the bobbins had a dog bone shape instead of cylindrical appearance. These effects were due to high PET-PET friction and blocking effects. The tape failed in the folding test, the tape yanking test and the high speed tensile test. It was brittle and split if suddenly pulled along the tape axis. The tape was unweavable in the circular loom due to the splitting. In the flat loom, the loom stopped after insertion of just one weft tape due to the splitting. Pure uniaxially-oriented PET tape thus has high tensile properties but is too brittle and has low tensile impact strength and so cannot be used in secondary operations such as weaving.

**Comparative Example 2**

Calcium carbonate is an additive used in the PP tape industry, as a processing aid that helps both in the tape production and weaving. 1.8 wt % of calcium carbonate was added as a masterbatch during film casting of a PET copolymer (I.V. of 0.79 dUg, 2wt% isophthalic acid comonomer) in the tape production line. The operation conditions are shown in Table 1. A 600 mm wide film was cast and slit into 120 tapes and wound on bobbins. The line speed was 170 m/min.

Results: An I.V. drop of more than 0.03 dUg was observed due to moisture present in CaCO$_3$ and as a result, the tenacity dropped down to 5.5 g/denier (tensile strength of 674 MPa). Further, Table 2 shows that adding calcium carbonate causes gloss reduction and loss of transparency. In the folding test, the tape yanking test and the high speed tensile test, the tape performed better than pure PET. The calcium carbonate prevented sticking and twinning of tapes and it allowed cylindrical bobbins to be made, but the tapes with calcium carbonate could only be woven in the circular at very low loom speeds. Thus, while it is known from literature that calcium carbonate works well with PP, it is not a sufficiently good solution for improving the secondary processing of unidirectionally-oriented PET tapes.

**Comparative Example 3**

This experiment was conducted using a PET homopolymer with an I.V. of 0.84 dUg. 2 wt% of barium sulphate (4.2 µm mean particle size) masterbatch, was added during film casting. The masterbatch carrier resin was also PET. The 600 mm wide film was slit into 120 tapes (the process conditions for tape production are shown in Table 1).
This additive is an anti-blocking agent used in BOPET films and as it has a similar refractive index as PET, it allows transparency to be retained.
Results: Tape sticking and twinning was overcome, and cylindrical bobbins could be obtained at line speeds of 100-120 m/min. However, the tape cracked along its axis in the folding test. If the tape was manually yanked suddenly, it broke easily with splintering. Also, in the high speed tensile test, it fractured in a brittle manner with splintering. In the weaving loom, the tape behaved like a tape of pure PET (Comparative Example 1), leading to the formation of white cotton-like fluff in the guides in the loom. Hence, the tape with barium sulphate was not weavable.
Thus, barium sulphate with PET reduces blocking and friction, and it has the advantage that the unidirectionally-oriented tape is transparent, but it is not sufficient for inducing toughness or making the tape weavable.

**Comparative Example 4**

The experiment was conducted using a PET homopolymer with I.V. of 0.84 dUg. 2.8 wt. % of a commercially available C8-LLDPE was introduced in the form of pellets during film casting, using the masterbatch feeding facility attached to the extruder (the process conditions and tape properties are shown in Table 1). The C8-LLDPE was an ethylene-octene copolymer having 7.6 mol % of 1-octene comonomer; a density of 935 kg/m$^3$; and a melt index of 2.5 g/10 min using 190°C/2.16 kg. The cast film was 600 mm wide and 120 tapes were slit from it. The draw ratio was 6.3:1 and the drawn-tape width was 2.8 mm and the thickness was 22 µm.
Results: The tenacity was 7.7 g/denier, corresponding to a tensile strength of 919.5 MPa. Sticking of the tapes after slitting did not occur. The tapes could be wound-up onto bobbins without any problems. The LLDPE acts as an anti-block.
In the tape folding test, the tape creased but did not split. In the tape yanking test, the tape broke with some splintering, but it was much better than pure PET. Hence, the tape could be woven in the circular loom. However, C8 LLDPE induces loss of transparency and hence it is not the best solution for making transparent, unidirectionally-oriented tapes. The optical properties based on the cast film are shown in Table 2. The disadvantage with C8 LLDPE is that it introduces haze in the tape and reduces the gloss. For wide films, whose most common use would be packaging, transparency is a most desirable property; adding LLDPE to unidirectionally-oriented films would reduce splintering tendency but it introduces a disadvantage in the form of haze.

**Comparative Example 5**

The experiment was conducted using a PET homopolymer with I.V. of 0.84 dUg. 5 wt. % of a commercially available C8-LLDPE was introduced in the form of pellets during film casting, using the masterbatch feeding facility attached to the extruder (the process conditions and tape properties are shown in Table 1). The C8-LLDPE was an ethylene-octene copolymer having 7.6 mol % of 1-octene comonomer; a density of 935 kg/m$^3$; and a melt index of 2.5 g/10 min using 190°C/2.16 kg. The cast film was 600 mm wide and 120 tapes were slit from it. The draw ratio was 6:1 and the drawn-tape width was 3 mm and the thickness was 30 µm.
Results: A tenacity of 7.4 g/denier (tensile strength of 907 MPa) was achieved. Sticking of the tapes after slitting did not occur. The tapes could be wound-up onto bobbins without any problems, and the resulting bobbins were cylindrical.
In the tape folding test, the tape creased but did not split. In the tape yanking test, the tape broke with some splintering, but it was much better than pure PET. Hence, the tape could be woven into fabric in a circular loom. Thus, the C8 LLDPE acts both as an anti-block and as an anti-splitting agent. However, C8 LLDPE induces loss of transparency and hence it is not the best solution for making transparent, unidirectionally-oriented tapes. The optical properties based on the cast film are shown in Table 2. The disadvantage with 5% C8 LLDPE is that it introduces haze (42.2%) and reduces the gloss (see Table 2).

On long term running (over 24 hours), it was noted that patchy areas appeared on the cast film. However, the tapes could be slit, drawn, heat set and wound up on the bobbins without line stoppage. When the patches in the film were examined, it was found that they were due to areas where the size and concentration of the LLDPE particles were different (this caused a difference in haze and hence a patchy areas could be seen). Although line stoppage did not occur, inhomogeneties in the LLDPE distribution would variation in the properties of the tapes wound on different bobbins. Further, it was found with long term running with C8 LLDPE, deposits form on the die lip and hence the line has to be stopped for cleaning. This occurs due to the total immiscibility of the LLDPE-PET melts. Thus, C8 LLDPE is not good enough as an anti-block and anti-splitting agent for industrial production where continuous operation over weeks is needed.

**Comparative Example 6 (2% PBT + PET)**

This experiment was conducted with a co-PET with I.V. of 0.84 dL/g containing 2wt% isophthalic acid (IPA) comonomer. 2 wt. % pellets of polybutylene terephthalate (PBT, grade SABIC Innovative Plastics Valox 315) was added from the masterbatch dosing unit during film casting (the process conditions and tape properties are shown in Table 1). The cast film was 600 mm wide and 85 tapes were slit from it. The draw ratio was 5.9: 1 and drawn-tape width was 2.99 mm and the thickness was 26 $\mu$m.

Results: The tenacity was 6.45 g/denier (tensile strength of 791 MPa). PBT showed no benefit in reducing the sticking of tapes or the splintering of the drawn tape. In the tape folding test, the tape split. In the tape yanking test, the 25 micron thick tape shattered into splinters. In the high speed tensile test, the tape failed by shattering into splinters. Hence, the mixture of two polyesters (PET and PBT) was not useful for tape production or for secondary processing (weaving).

**Example 7 (branched PC A + PET)**

The following examples show the use of polycarbonate to achieve the aims of the invention. The polycarbonates used are listed in Table 3.

This experiment was conducted with a co-PET with I.V. of 0.84 dUg and 2 wt% IPA comonomer. 2 wt.% of the branched polycarbonate A (see Table 3) was introduced during film casting, using the masterbatch feeding facility on the extruder (the process conditions and tape properties are shown in Table 4). The cast film was 600 mm wide and 85 tapes were slit from it. The drawn-tape width was 3 mm and the thickness was 25 $\mu$m.

The cast film and the unidirectionally-oriented tapes were highly transparent. In fact Table 2 shows that the gloss and the transparency of the 2 wt% PC A-PET film was higher than the pure PET film. Examination in the transmission electron microscope showed the PC domains were about 100-200 nm in size.

Results: Sticking of tapes after slitting occured. The tapes reached a tenacity of 7.0 g/denier (tensile strength of 858 MPa), with an elongation-to-break of 10%. In the folding test, the 2 wt% PC-PET tape did not split or crease. In the manual tape yanking test, the 27 micron thick tape could not be broken. In the high speed tensile test, the fracture surface showed ductility and no fibrils. The splitting performance of the PET tape with 2 wt% branched polycarbonate A in these tests was even superior to the PET with 2.8 wt% C8 LLDPE or the 5 wt% C8 LLDPE in Comparative Examples 4 and 5, indicating a superior toughness than the prior art. It is clear that PC makes the important secondary operation of weaving feasible and all that was needed to improve the production of PET tape was an anti-block and friction reduction additive.

It can be therefore concluded that that the 2 wt% PC would prevent the formation of cotton-like fluff in the weaving loom.

Preferably, for weaving tapes, in addition to PC, an anti-blocking agent is also added, as subsequent examples of Table 5 show, since this reduces friction as compared to pure PET tape or PET tape with 2 wt% polycarbonate, as exemplified in examples 7-11. For unidirectionally-oriented 0.5 to 2 cm wide straps, made from the PC-PET composition of this example, which are not subjected to high friction in tape production or end use, an anti-blocking agent may be present but is not preferred. For unidirectionally-oriented wide films (about 0.2 m to 10 m wide) made from the PC-PET composition of this example, an anti-block such as barium sulphate or nano silica would be needed to prevent blocking of the film on the roll, which would make unwinding difficult afterwards.

**Example 8 (branched PC F + PET)**

This experiment was conducted with a co-PET with I.V. of 0.84 dUg and 2 wt% IPA comonomer. 2 wt.% of the branched polycarbonate F (see Table 3) was introduced during film casting, using the masterbatch feeding facility on the extruder (the process conditions and tape properties are shown in Table 4). The cast film was 600 mm wide and 85 tapes were slit from it. A draw ratio of 5.7:1 was used. The drawn-tape width was 3.07 mm and the thickness was 23

μm. The tenacity was 6.5 g/denier (tensile strength of 797 MPa) and the elongation to break was 11.4%.

Results: The film and the unidirectionally-oriented tapes made after addition of 2 wt% polycarbonate F were highly transparent and were similar to pure PET film.

Sticking of tapes after slitting did occur. However, in the folding test, the tape did not split or crease. In the tape yanking test, the 23 micron thick tape could not be broken. In the high speed tensile test, the fracture surface showed no fibrils. The splitting performance was superior to all the samples in Comparative Examples 1-6.

It can thus be concluded that the PC would prevent the formation of cotton-like fluff in the loom.

### Example 9 (linear PC C + PET)

In this example, and the subsequent examples, linear polycarbonates were tested.

This experiment was conducted with a co-PET with I.V. of 0.84 dUg and 2wt% IPA comonomer. 2 wt.% of the low molecular weight linear polycarbonate C (see Table 3) was introduced during film casting, using the masterbatch feeding facility on the extruder (the process conditions and tape properties are shown in Table 4). The cast film was 600 mm wide and 85 tapes were slit from it. A draw ratio of 6 : 1 was used. The drawn-tape width was 2.99 mm and the thickness was 26 μm.

Results: The tenacity was 6.71 g/denier (tensile strength of 823 MPa) and the elongation to break was 7.7%. Sticking of tapes after slitting did occur. However, in the folding test, the tape did not split or crease. In the manual tape yanking test, the 26 μm thick tape could not be broken. In the high speed tensile test, the fracture surface showed no fibrils. The splitting resistance was superior to all the samples in Comparative Examples 1-6.

It can thus be concluded that the low molecular weight linear PC, like branched PC would prevent the formation of cotton-like fluff in the loom.

### Example 10 (linear PC D + PET)

This example used 2 wt% of a high molecular weight polycarbonate D as the additive. The experiment was conducted with a co-PET with I.V. of 0.84 dUg and 2wt% IPA comonomer. 2 wt.% of polycarbonate D (see Table 3) was introduced during film casting, using the masterbatch feeding facility on the extruder (the process conditions are shown in Table 4). The cast film was 600 mm wide and 85 tapes were slit from it. A draw ratio of 6:1 was used. The drawn-tape width was 2.99 mm and the thickness was 24 μm.

Results:

The tenacity was 6.73 g/denier (tensile strength of 825 MPa) and the elongation-to-break was 7.6%. Sticking of the tapes after slitting did occur. However, in the folding test, the tape did not split or crease. In the manual tape yanking test, the 24 μm thick tape could not be broken. In the high speed tensile test, the fracture surface showed no fibrils. The splitting resistance was superior to all the samples in Comparative Examples 1-6.

It can thus be concluded that the presence of linear PC would prevent the formation of cotton-like fluff in the loom.

The cast film and the unidirectionally-oriented tapes made after addition of 2 wt% polycarbonate D were highly transparent and were similar to pure PET film. Table 2 shows the 60° gloss of PET cast film with 2 wt% of PC D was 122 GU, compared with 125 GU for the 100 wt% PET film (see Table 2); its haze was 1% and the same as the 100% PET film. Thus, 2 wt% PC D would be excellent to make transparent, unidirectionally-oriented wide films (>0.5 metres wide) and 1-3 cm wide straps which are not subjected to high friction in processing or end use.

### Example 11 (PC E + PET)

This example used 2 wt% of a very high molecular weight polycarbonate E as the additive. The experiment was conducted with a co-PET with I.V. of 0.84 dUg and 2wt% IPA comonomer; 2 wt.% of polycarbonate E (see Table 3) was introduced during film casting, using the masterbatch feeding facility on the extruder (the process conditions and tape properties are shown in Table 4). The cast film was 600 mm wide and 85 tapes were slit from it. A draw ratio of 5.7 : 1 was used. The drawn-tape width was 3.06 mm and the thickness was 26 μm.

Results: The tape tenacity was 6.13 g/denier (tensile strength of 751.5 MPa) and the elongation-to-break was 9.43 %. In the tape folding test, the tape did not split or crease. In the manual tape yanking test, the 26 μm thick tape could not be broken. In the high speed tensile test, the fracture surface showed no fibrils. The performance was superior to all the samples in Comparative Examples 1-6. However, sticking of the tapes after slitting occured.

Thus, very high molecular weight linear PC can also be used instead of branched PC. It can therefore be concluded that the presence of linear, very high molecular weight PC in the PET tapes would prevent the formation of cotton-like fluff in the loom.

The cast film and the unidirectionally-oriented tapes made after addition of 2 wt% polycarbonate E were highly transparent and were similar to pure PET film. Table 2 shows the 60° gloss of PET cast film with 2% of PC E was 127 GU, compared with 125 GU for the 100 wt% PET film (see Table 2); its haze was 1.7% which is a little higher than for the 100 wt% PET film. Thus, 2 wt% PC E would be good for making transparent, unidirectionally-oriented tapes wide films (>0.5 metres wide) and 0.5 to 2 cm wide straps which are not subjected to high friction in processing or end use.

As discussed and shown in examples 7-11 the presence of branched polycarbonates or linear polycarbonates with low to very high molecular weight was good for providing unidirectionally-oriented PET tapes that would prevent the formation of cotton-like fluff in the weaving loom. Branched and linear polycarbonates are equally effecting in giving splitting resistance to unidirectionally-oriented PET tape.

Furthermore, examples 7-11 provided tapes that had a high transparency, high gloss, high toughness and resistance to splintering.

In order to decrease sticking of the tapes to each other after slitting and/or improving bobbin wind-up and/or to reduce the friction in the weaving loom, an anti-blocking agent may be present in the tapes. This is an aid in the primary tape production process.

For unidirectionally oriented straps, the presence of an anti-blocking agent is possible, but not preferred.

In examples 12 to 16, 2 wt% of the branched polycarbonate A was used, and six anti-blocking agents were evaluated in conjunction with it: barium sulphate; pentaerythritol tetrastearate (pets); a silicone oil; Clariant anti block CESA®; C8 LLDPE and calcium carbonate. The performance of films and tapes cast from the polycarbonates containing the anti-blocking agents is shown in Table 5.

**Example 12 (PC A + PET + anti-blocking agent barium sulphate)**

This experiment was conducted with a co-PET with I.V. of 0.84 dUg and 2 wt. % IPA comonomer. 3 wt. % of the branched polycarbonate A (see Table 3) along with 0.5% Sachtoperse AB-TM 18383 Fein barium sulphate (from Sachtleben Chemie) was introduced during film casting, using the masterbatch feeding facility on the extruder (the process conditions and tape properties are shown in Table 5). The cast film was 600 mm wide and 85 tapes were slit from it. The drawn-tape width was 3 mm and the thickness was 25 $\mu$m. The draw ratio was 5.9 :1.

Results: A high tenacity of 7.04 g/denier (tensile strength of 863 MPa) was attained. The sticking of tapes after slitting was reduced and the wind-up of bobbin was improved; thus, it is concluded that preferably unidirectionally-oriented tapes of the invention comprising polyethylene terephthalate and polycarbonate, further comprise an anti-blocking agent such as barium sulphate. In addition, the cast film and the unidirectionally-oriented tapes were highly transparent, because the barium sulphate has refractive index similar to PET, and hence woven fabric made from this composition would also be transparent.

In the tape folding test, the tape did not split or crease. In the manual tape yanking test, the 25 $\mu$m thick tape could not be broken. In the high speed tensile test, the fracture surface showed no fibrils.

The friction of the combination of 3 wt% PC and 0.5 wt% barium sulphate-PET was decreased sufficiently to reduce sticking of the tapes after slitting, and in the wind-up of the bobbins. Thus, the anti-block is needed to improve the tape production process.

The combination of 3 wt% PC and 0.5 wt% barium sulphate with PET is especially suitable for transparent, unidirectionally-oriented wide films. The PC provides the resistance to tearing and impact, and the barium sulphate prevents blocking of the unidirectionally-oriented wide film, while neither PC nor the barium sulphate impair the transparency of the film.

**Example 13 (PC A + PET + anti-blocking agent pets)**

In this example, pentaerythritol tetrastearate (pets) was used as an anti-blocking agent to lower friction, along with branched polycarbonate A (Table 3). Branched PC A was prepared by compounding 7.5 wt% of pets (melting point 60°C) into the pellets. This was done by mixing the pets with the polycarbonate powder in a screw extruder, and pelletising the strands. The branched PC A therefore has a 7.5 wt% pets built into it, and it is named polycarbonate B in Table 3; pets has Mw>1000 and has low volatility. An addition level of 2 wt% of PC B results in ~ 0.1% pets in the final tape. 2 wt% of the PC B (containing 7.5% pets) was then added to the PET in the tape line during film casting. The PET used was a co-PET with I.V. of 0.84 dUg and 2 wt% IPA comonomer.

Results - The pets decreased the friction sufficiently to reduce the twinning of the tapes after slitting, and the bobbin wind-up was improved. The properties of the resulting tapes are shown in Table 5. The draw ratio was 5.5:1; the tape width was 3.03 mm, the thickness was 23 $\mu$m and the tenacity was 6.68 g/denier (tensile strength of 819 MPa).

In the tape folding test, the tape did not split or crease. In the manual tape yanking test, the 23 $\mu$m thick tape could not be broken. In the high speed tensile test, the fracture surface showed no fibrils. Polycarbonate with pets as an anti-blocking agent is suitable for production of unidirectionally-oriented polyester weaving tape. Polycarbonate with pets as an anti-blocking agent will also be especially suitable for making transparent, unidirectionally-oriented wide PET films. The PC would provide the tear resistance and impact protection to the unidirectionally-oriented wide film, while the pets would prevent blocking of the unidirectionally-oriented film rolls.

**Example 14 (PC A + PET + silicone oil)**

Branched PC A was prepared with a low volatility silicone oil (poly(dimethylsiloxane)). This was done by mixing 5 wt.% silicone oil with the polycarbonate powder in a laboratory screw extruder with a liquid injection option, and pelletising the extruded strands. The branched PC A therefore has a 5 wt. % silicone oil built into it, and it is named polycarbonate G in Table 3. 2 wt. % of the PC G (containing 5% silicone oil) was then added to the PET in the tape line during film casting. The PET used was a co-PET with I.V. of 0.84 dUg and 2 wt. % IPA comonomer.

Results: The silicone oil decreased the friction sufficiently to reduce the twinning of the tapes after slitting, and the bobbin wind-up was improved. The operating conditions of the tape line and the properties of the resulting unidirectionally-oriented tapes is shown in Table 5. The draw ratio was 5.7:1; the tape width was 3.03 mm, the thickness was 26 $\mu$m and the tenacity was 6.56 g/denier (tensile strength of 804 MPa) and the elongation-to-break was 10.5 %.

In the tape folding test, the tape did not split or crease. In the manual tape yanking test, the 26 $\mu$m thick tape could not be broken. In the high speed tensile test, the fracture surface showed no fibrils.

The cast film with 2 wt% PC G was hazy. Table 2 shows the gloss was 111 GU and the haze was 13.7%. The optical properties are similar to that of PET with 2.8 wt% C8 LLDPE (see Table, haze of 13.7%, gloss of 115 GU), but better than PET with 5 wt% C8 LLDPE (see Table, haze of 42.2 %, gloss of 109 GU).

Polycarbonate with silicone oil as an anti-blocking agent would be suitable for making, unidirectionally-oriented polyester tapes where transparency is not needed in the woven fabric. This composition may be suitable for 1-2 cm wide polyester straps but not for unidirectionally-oriented film due to the haze created by the silicone oil.

**Example 15 (2%PC F + 2% CESA® anti blocking agent + PET)**

2wt.% branched PC F and 2wt.% of a commercial PET anti-blocking agent were tried together.

This experiment was conducted with a co-PET with I.V. of 0.84 dUg and 2% IPA comonomer. 2 wt. % of the branched polycarbonate F (see Table 3) along with 2wt.% CESA® anti-blocking agent from Clariant was introduced during film casting, using the masterbatch feeding facility on the extruder (the process conditions and tape properties are shown in Table 5). The cast film was 600 mm wide and 85 tapes were slit from it. The draw ratio was 5.7 : 1. The drawn-tape width was 3.08 mm and the thickness was 23 $\mu$m.

Results: A tenacity of 6.23 g/denier (tensile strength of 764 MPa) was attained. The sticking of tapes after slitting was reduced and the wind-up of bobbin was improved; thus, the anti-blocking agent does play a beneficial role.

In the tape folding test, the tape did not split or crease. In the manual tape yanking test, the 23 $\mu$m thick tape could not be broken. In the high speed tensile test, the fracture surface showed no fibrils.

The PC provides the tear resistance and impact protection to the unidirectionally-oriented tape in the secondary weaving operation, while the anti-blocking agent prevents blocking of the unidirectionally-oriented tapes on bobbins in the primary tape production process.

**Example 16 (PC A + C8 LLDPE + PET)**

This experiment was conducted with a co-PET with I.V. of 0.84 dUg and 2wt.% IPA comonomer. 2 wt. % of the branched polycarbonate A (see Table 3) and 5wt. % of a C8 LLDPE (oct-1-ene LLDPE, Dow SC2108) were introduced during film casting, using the pellet masterbatch feeding facility on the extruder of the PET tape line (the process conditions and tape properties are shown in Table 5). The cast film was 600 mm wide and 85 tapes were slit from it. The draw ratio was 5.8 : 1 and the drawn-tape width was 3.01 mm and the thickness was 23 $\mu$m.

Results: A tenacity of 7.26 g/denier (tensile strength of 890 MPa) was reached with an elongation-to-failure of 12.7%. The line speed was 122 m/min. Sticking of the tapes after slitting did not occur and cylindrical bobbins could be wound. In the folding test, the tape did not split or crease. In the manual tape yanking test, the 27 micron thick tape could not be broken. In the high speed tensile test, the fracture surface showed no fibrils. The performance of the PET tape with 2 wt.% branched polycarbonate A in these tests was even superior to the PET with 5 wt.% C8 LLDPE in Comparative Examples 4 and 5, indicating a superior toughness.

In the weaving trial, fabric could be woven comfortably in a circular loom without impedance from friction and without the formation of cotton-like fluff.

The composition comprising PET, (branched) polycarbonate and a polyolefin therefore gave the combination that is especially suited for making unidirectionally-oriented weaving tape and weaving it in a loom. This combination gave a superior weaving performance in the circular weaving loom than that of for example Comparative Example 4 or Comparative Example 5. The branched polycarbonate provided the resistance against splintering due to suddenly-applied tensile forces and twisting forces on the tapes in the loom, while the polyolefin, prevented the twinning of tapes after slitting and reduced the friction during winding of bobbins, and during the secondary weaving operation in the loom. It was noted that compared with the Comparative examples (from pure PET or PET with 2-5 wt% LLDPE), the tape with 2 wt.% PC and 5 wt.% LLDPE was excellent in weaving, allowing higher weaving speeds and reducing greatly the formation of fluff in the guides of the loom, and also yielding fabrics with superior quality. With the introduction of 5 wt.% C8 LLDPE to the PC-PET blend, the transparency was lost, hence this option is most suitable for unidirectionally-oriented polyester tapes and straps where transparency is not needed.

For the unidirectionally-oriented wide PET film where transparency is needed, it is better to use polycarbonate and an anti-blocking agent with a refractive index similar to PET, such as for example barium sulphate.

**Example 17 (PC A + calcium carbonate + PET)**

A homoPET (non-commercial grade) with I.V. of 0.84 dUg was used. The composition consisted of 92 wt% PET, 3 wt% PC F and 5 wt% CaCO$_3$ Masterbatch (80 wt% filler, 20 wt% LLDPE). This composition was used to weave carpet tape backing with unidirectionally- oriented polyester tape. The required denier was 1099 and the tapes had a thickness of 37 μm and width of 2.5 mm. The tenacity was not very important (4.82 g/denier) but it was important to have a shrinkage of < 2% at 130°C. Further, for carpet backing, the fabric width is high and it has to be woven in a flat loom instead of a circular loom. The projectile flat loom imparts severe tensile impact stresses on the tape, and while PP can withstand this, PET is more brittle and splits; the machine stops after insertion of the first weft tape.
125 tapes were slit from a cast film that was 671 mm wide. The tapes were drawn at 90 and heat set at 220°C. The draw ratio was 5: 1.

Results: the unidirectionally-oriented polyester tapes were woven successfully in a Sulzer flat loom into a fabric. The tape with the above composition could withstand the weft insertion by the projectile. The woven fabric was tufted successfully to make a piece of carpet.

**Example 18 (2%PC F + 2% SUKANO T dc S479-HP anti blocking agent + PET)**

2wt.% branched PC F and 2wt.% of a commercial PET anti-blocking agent were tried together.

This experiment was conducted with PET homopolymer with I.V. of 0.84 dL/. 2 wt. % of the branched polycarbonate F (see Table 3) along with 2wt.% SUKANO T dc S479-HP anti-blocking agent from Sukano (which is a slip-antiblock masterbatch which contains waxes as slipping agent and silica as antiblocking agent) was introduced during film casting, using the masterbatch feeding facility on the extruder (the process conditions and tape properties are shown in Table 5). The cast film was 711 mm wide and 150 tapes were slit from it. The draw ratio was 4.7 : 1. The drawn-tape width was 2.04 mm and the thickness was 29 μm.

Results: A tenacity of 5.02 g/denier (tensile strength of 615.6 MPa) was attained. The sticking of tapes after slitting was reduced and the wind-up of bobbin was improved; thus, the anti-blocking agent does play a beneficial role.

In the tape folding test, the tape did not split or crease. In the manual tape yanking test, the 29 μm thick tape could not be broken. In the high speed tensile test, the fracture surface showed no fibrils.

The PC provides the tear resistance and impact protection to the uniaxially-oriented tape in the secondary weaving operation, while the anti-blocking agent prevents blocking of the uniaxially-oriented tapes on bobbins in the primary tape production process.

Conclusions

From the above examples it can be concluded that:

• Unidirectionally-oriented tapes of the invention comprising polyester and polycarbonate show positive results in the tape folding test, tape yanking test and high speed tensile test, which means for example that they are less prone to splitting than the unidirectionally-oriented tapes known thus far. Additional advantages of these tapes may be that their optical properties are adjustable (control of transparency and gloss)
• Judging from the positive results in the folding test, the tape yanking test and the high speed tensile test for the tapes of the invention, tapes of the invention can be woven into a fabric in a weaving loom without the formation of fluff (as is also experimentally proven for some of the tapes in the examples).
• The unidirectionally-oriented tapes of the invention are robust enough to weave in both circular and flat looms.
• Unaxially-oriented tapes of the invention comprising polyester and polycarbonate, preferably further comprise an anti-blocking agent, since this reduces the sticking of the tapes to each other and reduces blocking in the bobbin during the primary tape production process and friction in the weaving loom (secondary operation).

- Unidirectionally-oriented straps with the polyester and polycarbonate composition of the invention are preferably made by a spinneret extrusion process, and anti-block is optional
- Unidirectionally-oriented wide polyester films with polycarbonate will allow impact resistance and an anti-blocking agent, preferably one with close refractive index to PET, will allow transparency and provide easy unwinding of the film from the roll.

**Claims**

1. Unidirectionally-oriented film comprising a composition consisting of a thermoplastic polyester (a) in an amount of 85 to 99.9 wt%, based on the total composition; a polycarbonate (b) in an amount of 0.1 to 15 wt%, based on the total composition; and an additive (c) in an amount of 0 to 10 wt%, based on the total composition wherein the film has a width of at least 0.5 mm and at most 10 m and a thickness in the range from 2 to 2000 $\mu$m.

2. Unidirectionally-oriented film according to claim 1, wherein the intrinsic viscosity of the polyester is at least 0.50 dUg as measured in phenol-1, 2 dichlorobenzene, at 25°C.

3. Unidirectionally-oriented film according to claim 1 or claim 2, wherein the thermoplastic polyester is polyethylene terephthalate, preferably a polyethylene terephthalate homopolymer.

4. Unidirectionally-oriented film according to any one of claims 1-3, wherein the polycarbonate is formed from the reaction of phosgene with bisphenol A or from a reaction between a diarylcarbonate and bisphenol A.

5. Unidirectionally-oriented film according to any one of claims 1-4, further comprising an anti-blocking agent.

6. Unidirectionally-oriented film according to claim 5, wherein the anti-blocking agent is linear low density polyethylene or silica or barium sulphate or calcium carbonate or titanium dioxide and/or a mixture of these.

7. Unidirectionally-oriented film according to any one of claims 1-6, further comprising a slip agent.

8. Unidirectionally-oriented film according to any one of claims 1-7, having a width of at least 0.5 mm and at most 15 mm and a thickness of at least 5 $\mu$m and at most 300 $\mu$m.

9. Process for making the film of anyone of claims 1-8 comprising the steps of:

   (a) extruding a composition consisting of 85 to 99.9 wt% of a thermoplastic polyester (a), based on the total composition; 0.1 to 15 wt% of a polycarbonate (b), based on the total composition; and 0 to 10 wt% of additive (c), based on the total composition, into a molten film;
   (b) quenching the molten film of step (a) to obtain a quenched film;
   (c) heating the quenched film of step (b) to obtain a heated film and
   (d) drawing the heated film of step (c) in the longitudinal direction to obtain an uniaxially-oriented film; and
   (e) heat-setting the uniaxially-oriented film formed in step (d) at a temperature in the range of 140 to 250°C; and optionally
   (f) collecting the uniaxially-oriented film obtained in step (e) on a roll.

10. Process for making the unidirectionally-oriented film of claim 8 having a width of at least 0.5 mm and at most 15 mm and a thickness of at least 5 $\mu$m and at most 300 $\mu$m comprising the steps of

    (a) extruding a composition consisting of 85 to 99.9 wt% of a thermoplastic polyester (a), based on the total composition; 0.1 to 15 wt% of a polycarbonate (b), based on the total composition; and 0 to 10 wt% of additive (c), based on the total composition, into a molten film and quenching said film and
    (b) slitting the film obtained in step (a) in the longitudinal direction to form a plurality of films with a width in the range of 2 to 30 mm;
    (c) heating and subsequently drawing the obtained films of step (b) in the longitudinal direction to form unidirectionally-oriented films having a width of at least 0.5 mm and at most 15 mm and a thickness of at least 5 $\mu$m and at most 300 $\mu$m and
    (d) heat-setting the unidirectionally-oriented films formed in step (c) at a temperature in the range of 140 to 250°C and optionally

(e) collecting the unidirectionally-oriented films obtained in step (d) on bobbins.

11. Process for making the unidirectionally-oriented film of claim 8 having a width of at least 0.5 mm and at most 15 mm and a thickness of at least 5 μm and at most 300 μm comprising the steps of

(a) extruding a composition consisting of 85 to 99.9 wt% of a thermoplastic polyester (a), based on the total composition; 0.1 to 15 wt% of a polycarbonate (b), based on the total composition; and 0 to 10 wt% of additive (c), based on the total composition, into a molten film and quenching said film;
(b) heating and subsequently drawing the obtained cast film of step (a) in the longitudinal direction to form unidirectionally-oriented film;
(c) slitting the unidirectionally-oriented film obtained in step (b) in the longitudinal direction to form a plurality of unidirectionally-oriented films with a width in the range of 0.5 mm and at most 15 mm and a thickness of at least 5 μm and at most 300 μm;
(d) heat-setting the unidirectionally-oriented films formed in step (c) at a temperature in the range of 140 to 250°C, and optionally
(a) collecting the unidirectionally-oriented films obtained in step (d) on bobbins.

12. Process for making the unidirectionally-oriented film of claim 8 having a width of at least 0.5 mm and at most 15 mm and a thickness of at least 5 μm and at most 300 μm comprising the steps of

(a) extruding a composition consisting of 85 to 99.9 wt% of a thermoplastic polyester (a), based on the total composition; 0.1 to 15 wt% of a polycarbonate (b), based on the total composition; and 0 to 10 wt% of additive (c), based on the total composition, into a molten film and quenching said film
(b) heating and subsequently drawing the obtained cast film of step (a) in the longitudinal direction to form unidirectionally-oriented film,
(c) heat-setting the unidirectionally-oriented films formed in step (b) at a temperature in the range of 140 to 250°C,
(d) slitting the unidirectionally-oriented, heat-set film obtained in step (c) in the longitudinal direction to form a plurality of unidirectionally-oriented, heat-set films with a width in the range of 0.5 mm and at most 15 mm and a thickness of at least 5 μm and at most 300 μm; and optionally
(e) collecting the unidirectionally-oriented, heat-set films obtained in step (d) on bobbins.

13. Process for the preparation of unidirectionally-oriented films of any one of claims 1-7 having a width in the range from 0.5 to 2 cm and a thickness of more than 300 μm and less than 2000 μm, preferably less than 900 μm comprising the steps of

(a) extruding a composition consisting of 85 to 99.9 wt% of a thermoplastic polyester (a), based on the total composition; 0.1 to 15 wt% of a polycarbonate (b), based on the total composition; and 0 to 10 wt% of additive (c), based on the total composition, from a multi-strand die into a chilled water bath to form multiple molten films with a width in the range of 0.6 to 3 cm and
(b) heating the films obtained in step (a);
(c) subsequently drawing the obtained films of step (b) in the longitudinal direction to form unidirectionally-oriented films having a width in the range from 0.5 to 2 cm and a thickness of more than 300 μm and less than 2000 μm, preferably less than 900 μm; and
(d) heat-setting the unidirectionally-oriented films formed in step (c) at a temperature in the range of 140 to 250°C, and optionally
(e) collecting the unidirectionally-oriented films formed in step (d) onto bobbins.

14. Use of the films of any one of claims 1-8 for food packaging, binding or strapping cartons, boxes, pallets, and textile fibre bales; for weaving tape fabrics.

15. Fabric woven from the film of claim 8.

16. Use of the fabric of claim 15 for sacks, flexible intermediate bulk containers (FIBC, jumbo bags), hot fill jumbo bags for materials such as bitumen, PVC coated fabrics for flex signage, carpet backing, geo textiles, geogrids, metallised fabrics, flexible electronics, and self-reinforced composites.

**Table 1.** Comparative examples, unidirectionally-oriented PET weaving tapes, with additives from prior art. Cast film width = 600 mm; number of slit tapes = 120

| Ex. | Additive | T chill roll (°C) | No of slit tapes | T 1st oven (drawing) (°C) | T 2nd oven (heat-setting) (°C) | Total draw ratio | Tape thickness after drawing (μm) | Final tape width (mm) | Linear density (denier) | TEN. (g/d) | E (%) | Line speed (m/min) |
|---|---|---|---|---|---|---|---|---|---|---|---|---|
| 1 | None (pure PET) | 35 | 120 | 108 | 250 | 4.9:1 | 22 | 2.80 | 630 | 6.3 | 14.7 | 140 |
| 2 | 1.8 wt% $CaCO_3$ | 35 | 120 | 114 | 220 | 5.3:1 | 19 | 2.95 | 594 | 5.5 | 13.8 | 170 |
| 3 | 2 wt% $BaSO_4$ | 35 | 120 | 100 | 220 | 5.8:1 | 25 | 2.1 | 597 | 6.6 | 10.5 | 120 |
| 4 | 2.8wt% C8 - LLDPE | 35 | 120 | 90 | 230 | 6.3:1 | 22 | 2.8 | 735 | 7.5 | 12 | 120 |
| 5 | 5 wt% C8 - LLDPE | 45 | 120 | 100 | 220 | 6.0:1 | 30 | 3 | | 7.4 | 15.6 | 300 |
| 6 | 2% PBT VALOX 315 | 30 | 85 | 105 | 221 | 5.9:1 | 26 | 2.99 | 985 | 6.45 | 8.97 | 120 |
| TEN. - tenacity; E = elongation to break; "-" = not applicable | | | | | | | | | | | | |

**Table 2.** Optical properties of cast film. The film thickness was 50-55 microns. The polyester was a co-PET with I.V. of 0.84 dL/g and 2 wt% IPA.

| Example | Cast film composition | Gloss at 60° (Gloss units) | Haze (%) |
|---|---|---|---|
| CE 1 | 100 wt% PET | 125 | 1 |
| CE 2 | 1.8 wt% CaCO$_3$ + PET | 101 | 11.5 |
| CE 4 | 2.8 wt% C8-LLDPE + PET | 115 | 13.7 |
| CE 5 | 5 wt% C8 LLDPE + PET | 109 | 42.2 |
|  | Polypropylene | 69 | 15 |
|  | Polyethylene | 27 | 54 |
| CE 6 | 5 wt% PBT + PET | 121 | 1.8 |
|  | 2 wt% PC A + PET | 153 | 0.9 |
|  | 2 wt% PC D + PET | 122 | 1 |
|  | 2 wt% PC E + PET | 127 | 1.7 |
|  | 2 wt% PC G + PET | 111 | 13.7 |

**Table 3.** Polycarbonate additives used for the invention. The polycarbonates are from SABIC Innovative Plastics and the grades are indicated.

| PC code | Polycarbonate | | | | additionally incorporated lubricant | | | |
| --- | --- | --- | --- | --- | --- | --- | --- | --- |
| | grade | type | average Mw (Daltons) | supplier | wt % | type | grade | supplier |
| A | Lexan 151 | Branched | 34000 | SABIC Innovative Plastics, NL | -- | -- | -- | -- |
| B | Lexan 151 + lubricant | Branched | 34000 | SABIC Innovative Plastics, NL | 7.5 | pentaerythritol tetrastearate | pets | Faci SpA |
| C | Lexan HF1110 | Linear, low viscosity | 22000 | SABIC Innovative Plastics, NL | -- | -- | -- | -- |
| D | Lexan 101 | Linear, high viscosity | 31000 | SABIC Innovative Plastics, NL | -- | -- | -- | -- |
| E | Lexan 131 | Linear, very high viscosity | 35000 | SABIC Innovative Plastics, NL | -- | -- | -- | -- |
| F | Lexan PK2870 | Branched | 34000 | SABIC Innovative Plastics, NL | -- | -- | -- | -- |
| G | Lexan 151 + lubricant | Branched | 34000 | SABIC Innovative Plastics, NL | 5.0 | Poly (dimethylsiloxane) | Baysilone M500 | Momentive Performance Materials |

EP 2 791 221 B1

**Table 4.** Co-PET with 2 wt% IPA (I.V. = 0.84 dUg) and polycarbonate. Cast film width = 600 mm, number of slit tapes = 85.

| Ex. | Trial | Component | T chill roll Cast film width (mm) (°C) | No. of slit tapes | T 1st oven drawing (°C) | T 2nd oven heat-setting (°C) | Total draw ratio | Tape thickness after drawing (μm) | Final tape width (mm) | Linear density (denier) | Ten. (g/den) | E. (%) | Sh. (180°C, 2 min) (%) | Line speed (m/min) |
|---|---|---|---|---|---|---|---|---|---|---|---|---|---|---|
| 7 | 5 | 2 wt% branched PC A | 34 | 600 | 85 | 95 | 220 | 5.9:1 | 27 | 3.00 | 1022 | 7.01 | 10.01 | 16.7 | 120 |
| 8 | 14 | 2 wt% branched PC F | 39 | 600 | 85 | 90 | 210 | 5.7:1 | 23 | 3.07 | 895 | 6.50 | 11.35 | 12.0 | 122 |
| 9 | 16 | 2 wt% linear PC C | 37 | 600 | 85 | 105 | 219 | 6:1 | 26 | 2.99 | 993 | 6.71 | 7.71 | 16.5 | 120 |
| 10 | 17 | 2 wt% linear PC D | 38 | 600 | 85 | 105 | 220 | 6:1 | 24 | 2.99 | 989 | 6.73 | 7.57 | 16.6 | 120 |
| 11 | 19 | 2 wt% linear PC E | 38 | 600 | 85 | 104 | 220 | 5.7:1 | 26 | 3.06 | 970 | 6.13 | 9.43 | 15.5 | 120 |

Ten.=Tenacity; E. = Elongation; Sh.=Shrinkage

**Table 5.** PET + polycarbonate + anti-block/slip additive. The polyester is a co-PET with 2% IPA comonomer (I.V. = 0.84 dUg). Example 17 uses a homoPET with I.V. of 0.84 dUg.

| Ex. | Component | T chill roll (°C) | Cast film width (mm) | No. of slit tapes | T 1st oven (°C) | T 2nd oven (°C) | Total draw ratio | Tape thickness after drawing (μm) | Final tape width (mm) | Linear density (denier) | Ten. (g/den) | Line speed (m/min) |
|---|---|---|---|---|---|---|---|---|---|---|---|---|
| 13 | 2 wt% PC B (= PC A + pets) | 43 | 600 | 85 | 90 | 209 | 5.5:1 | 23 | 3.03 | 901 | 6.68 | 123 |
| 12 | 3 wt% PC A + 0.5 wt% barium sulphate | 34 | 600 | 85 | 95 | 219 | 5.9:1 | 25 | 3.00 | 963 | 7.04 | 120 |
| 16 | 2 wt% PC A + 5 wt% C8 LLDPE | 34 | 600 | 85 | 90 | 220 | 5.8:1 | 23 | 3.01 | 832 | 7.26 | 121.7 |
| 15 | 2 wt% PC F + 2 wt% CESA Block | 39 | 600 | 85 | 90 | 210 | 5.7:1 | 23 | 3.08 | 890 | 6.23 | 122 |
| 14 | 2 wt% PC G (= PC A + silicone oil) | 38 | 600 | 85 | 105 | 219 | 5.7:1 | 26 | 3.03 | 992 | 6.56 | 120 |
| 17 | 92 wt% PET + 3 wt% PC F + 5 wt% CaCO$_3$ masterbatch (80% filler, 20% LLDPE) | 39 | 671 | 125 | 90 | 220 | 5:1 | 37 | 2.48 | 1099 | 4.82 | 150 |
| 18 | 95% PET + 2% Sukano S479-HP+3% Lexan PK 2870 | 40 | 711 | 150 | 90 | 228 | 4.7:1 | 29 | 2.04 | 736 | 5.02 | 150 |

Ten.=Tenacity

**Table 6.** PETs used

| PETs | Grade | Supplier |
|---|---|---|
| co-PET (IV 0.84 dUg with 1.6 wt% IPA) | BC-112 | SABIC, Saudi Arabia |
| PET homopolymer (IV 0.84 dUg) | Experimental polymer | SABIC, Saudi Arabia |
| co-PET (IV 0.84 dUg 2 wt% IPA comonomer) | BC-112 | SABIC, Saudi Arabia |
| PET-copolymer (IV 0.79 dUg with 2 wt% isophthalic comonomer) | BC-111 | SABIC, Saudi Arabia |

**Table 7.** Additives

| Additives | Grade | Supplier |
|---|---|---|
| $CaCO_3$ | Maxithen /Unimax PET7A6860ASP | Gabriel Chemie, AT |
| C8-LLDPE | Clearflex CL 508 | Polimeri Europa srl, IT |
| PBT | Valox 315 | SABIC Innovative Plastics, NL |
| pets | Pentaerythritol Tetrastearate | Faci SpA |
| $BaSO_4$ | Sachtoperse AB-TM 18383 | Sachtleben Chemie, DE |
| CESA block | NEA 0025656/25 | Clariant |
| Baysilone Oil | M500 | Momentive |

**Patentansprüche**

1. Unidirektional orientierte Folie, umfassend eine Zusammensetzung, die aus einem thermoplastischen Polyester (a) in einer Menge von 85 bis 99,9 Gew.%, bezogen auf die gesamte Zusammensetzung; einem Polycarbonat (b) in einer Menge von 0,1 bis 15 Gew.%, bezogen auf die gesamte Zusammensetzung; und einem Additiv (c) in einer Menge von 0 bis 10 Gew.%, bezogen auf die gesamte Zusammensetzung, besteht, wobei die Folie eine Breite von mindestens 0,5 mm und höchstens 10 m und eine Dicke im Bereich von 2 bis 2000 $\mu$m aufweist.

2. Unidirektional orientierte Folie nach Anspruch 1, wobei die Grenzviskosität des Polyesters mindestens 0,50 dl/g beträgt, gemessen in Phenol/1,2-Dichlorbenzol bei 25 °C.

3. Unidirektional orientierte Folie nach Anspruch 1 oder Anspruch 2, wobei der thermoplastische Polyester Polyethylenterephthalat ist, vorzugsweise ein Polyethylenterephthalat-Homopolymer.

4. Unidirektional orientierte Folie nach einem der Ansprüche 1 bis 3, wobei das Polycarbonat durch die Reaktion von Phosgen mit Bisphenol A oder durch eine Reaktion zwischen einem Diarylcarbonat und Bisphenol A gebildet ist.

5. Unidirektional orientierte Folie nach einem der Ansprüche 1 bis 4, ferner umfassend ein Antiblockiermittel.

6. Unidirektional orientierte Folie nach Anspruch 5, wobei das Antiblockiermittel lineares Polyethylen mit niedriger Dichte oder Siliciumdioxid oder Bariumsulfat oder Calciumcarbonat oder Titandioxid und/oder eine Mischung von diesen ist.

7. Unidirektional orientierte Folie nach einem der Ansprüche 1 bis 6, ferner umfassend ein Gleitmittel.

8. Unidirektional orientierte Folie nach einem der Ansprüche 1 bis 7 mit einer Breite von mindestens 0,5 mm und höchstens 15 mm und einer Dicke von mindestens 5 $\mu$m und höchstens 300 $\mu$m.

9. Verfahren zur Herstellung der Folie nach einem der Ansprüche 1 bis 8, umfassend die folgenden Schritte:

(a) Extrudieren einer Zusammensetzung, bestehend aus 85 bis 99,9 Gew.% eines thermoplastischen Polyesters (a), bezogen auf die gesamte Zusammensetzung; 0,1 bis 15 Gew.% eines Polycarbonats (b), bezogen auf die gesamte Zusammensetzung; und 0 bis 10 Gew.% Additiv (c), bezogen auf die gesamte Zusammensetzung, zu einer geschmolzenen Folie;

(b) Quenchen der geschmolzenen Folie aus Schritt (a), um eine gequenchte Folie zu erhalten;

(c) Erwärmen der gequenchten Folie aus Schritt (b), um eine erwärmte Folie zu erhalten; und

(d) Ziehen der erwärmten Folie aus Schritt (c) in die Längsrichtung, um eine uniaxial orientierte Folie zu erhalten; und

(e) Thermofixieren der in Schritt (d) gebildeten uniaxial orientierten Folie bei einer Temperatur im Bereich von 140 bis 250 °C; und gegebenenfalls

(f) Auffangen der in Schritt (e) erhaltenen uniaxial orientierten Folie auf einer Rolle.

10. Verfahren zum Herstellen der unidirektional orientierten Folie nach Anspruch 8 mit einer Breite von mindestens 0,5 mm und höchstens 15 mm und einer Dicke von mindestens 5 $\mu$m und höchstens 300 $\mu$m, umfassend die folgenden Schritte:

(a) Extrudieren einer Zusammensetzung, bestehend aus 85 bis 99,9 Gew.% eines thermoplastischen Polyesters (a), bezogen auf die gesamte Zusammensetzung; 0,1 bis 15 Gew.% eines Polycarbonats (b), bezogen auf die gesamte Zusammensetzung; und 0 bis 10 Gew.% Additiv (c), bezogen auf die gesamte Zusammensetzung, zu einer geschmolzenen Folie und Quenchen der Folie; und

(b) Aufschlitzen der in Schritt (a) erhaltenen Folie in der Längsrichtung, um eine Vielzahl von Folien mit einer Breite im Bereich von 2 bis 30 mm zu bilden;

(c) Erwärmen und anschließendes Ziehen der in Schritt (b) erhaltenen Folien in die Längsrichtung, um unidirektional orientierte Folien mit einer Breite von mindestens 0,5 mm und höchstens 15 mm und einer Dicke von mindestens 5 $\mu$m und höchstens 300 $\mu$m zu bilden, und

(d) Thermofixieren der in Schritt (c) gebildeten unidirektional orientierten Folien bei einer Temperatur im Bereich von 140 bis 250 °C; und gegebenenfalls

(e) Auffangen der in Schritt (d) erhaltenen unidirektional orientierten Folien auf Spulen.

11. Verfahren zum Herstellen der unidirektional orientierten Folie nach Anspruch 8 mit einer Breite von mindestens 0,5 mm und höchstens 15 mm und einer Dicke von mindestens 5 $\mu$m und höchstens 300 $\mu$m, umfassend die folgenden Schritte:

(a) Extrudieren einer Zusammensetzung, bestehend aus 85 bis 99,9 Gew.% eines thermoplastischen Polyesters (a), bezogen auf die gesamte Zusammensetzung; 0,1 bis 15 Gew.% eines Polycarbonats (b), bezogen auf die gesamte Zusammensetzung; und 0 bis 10 Gew.% Additiv (c), bezogen auf die gesamte Zusammensetzung, zu einer geschmolzenen Folie und Quenchen der Folie;

(b) Erwärmen und nachfolgendes Ziehen der erhaltenen Gussfolie aus Schritt (a) in die Längsrichtung, um unidirektional orientierte Folie zu bilden;

(c) Aufschlitzen der in Schritt (b) erhaltenen unidirektional orientierten Folie in der Längsrichtung, um eine Vielzahl von unidirektional orientierten Folien mit einer Breite von 0,5 mm und höchstens 15 mm und einer Dicke von mindestens 5 $\mu$m und höchstens 300 $\mu$m zu bilden;

(d) Thermofixieren der in Schritt (c) gebildeten unidirektional orientierten Folien bei einer Temperatur im Bereich von 140 bis 250 °C; und gegebenenfalls

(a) Auffangen der in Schritt (d) erhaltenen unidirektional orientierten Folien auf Spulen.

12. Verfahren zum Herstellen der unidirektional orientierten Folie nach Anspruch 8 mit einer Breite von mindestens 0,5 mm und höchstens 15 mm und einer Dicke von mindestens 5 $\mu$m und höchstens 300 $\mu$m, umfassend die folgenden Schritte:

(a) Extrudieren einer Zusammensetzung, bestehend aus 85 bis 99,9 Gew.% eines thermoplastischen Polyesters (a), bezogen auf die gesamte Zusammensetzung; 0,1 bis 15 Gew.% eines Polycarbonats (b), bezogen auf die gesamte Zusammensetzung; und 0 bis 10 Gew.% Additiv (c), bezogen auf die gesamte Zusammensetzung, zu einer geschmolzenen Folie und Quenchen der Folie;

(b) Erwärmen und nachfolgendes Ziehen der in Schritt (a) erhaltenen Gussfolie in die Längsrichtung, um unidirektional orientierte Folie zu bilden;

(c) Thermofixieren der in Schritt (b) gebildeten unidirektional orientierten Folien bei einer Temperatur im Bereich von 140 bis 250 °C;

(d) Aufschlitzen der in Schritt (c) erhaltenen unidirektional orientierten thermofixierten Folie in der Längsrichtung, um eine Vielzahl von unidirektional orientierten thermofixierten Folien mit einer Breite im Bereich von 0,5 mm und höchstens 15 mm und einer Dicke von mindestens 5 μm und höchstens 300 μm zu bilden; und gegebenenfalls

(e) Auffangen der in Schritt (d) erhaltenen unidirektional orientierten thermofixierten Folien auf Spulen.

13. Verfahren zur Herstellung von unidirektional orientierten Folien nach einem der Ansprüche 1 bis 7 mit einer Breite im Bereich von 0,5 bis 2 cm und einer Dicke von mehr als 300 μm und weniger als 2000 μm, vorzugsweise weniger als 900 μm, umfassend die folgenden Schritte:

(a) Extrudieren einer Zusammensetzung, bestehend aus 85 bis 99,9 Gew.% eines thermoplastischen Polyesters (a), bezogen auf die gesamte Zusammensetzung; 0,1 bis 15 Gew.% eines Polycarbonats (b), bezogen auf die gesamte Zusammensetzung; und 0 bis 10 Gew.% Additiv (c), bezogen auf die gesamte Zusammensetzung, aus einer Mehrstrangdüse in ein gekühltes Wasserbad, um mehrere geschmolzene Folien mit einer Breite im Bereich von 0,6 bis 3 cm zu bilden; und
(b) Erwärmen der in Schritt (a) erhaltenen Folien;
(c) anschließend Ziehen der in Schritt (b) erhaltenen Folien in die Längsrichtung, um unidirektional orientierte Folien mit einer Breite im Bereich von 0,5 bis 2 cm und einer Dicke von mehr als 300 μm und weniger als 2000 μm, vorzugsweise weniger als 900 μm zu bilden; und
(d) Thermofixieren der in Schritt (c) gebildeten unidirektional orientierten Folien bei einer Temperatur im Bereich von 140 bis 250 °C; und gegebenenfalls
(e) Auffangen der in Schritt (d) gebildeten unidirektional orientierten Folien auf Spulen.

14. Verwendung der Folien nach einem der Ansprüche 1 bis 8 zum Verpacken von Lebensmitteln, zum Binden oder Umreifen von Kartons, Boxen, Paletten oder Textilfaserballen; zum Weben von Textilmaterial für Gewebebänder.

15. Textilmaterial, das aus der Folie gemäß Anspruch 8 gewebt ist.

16. Verwendung des Textilmaterials gemäß Anspruch 15 für Säcke, flexible Großpackmittel (FIBC, Jumbobeutel), heiß füllbare Jumbobeutel für Materialien wie Bitumen; PVC-beschichtete Textilmaterialien für flexible Beschilderung, Teppichrückseiten, Geotextilien, Geogitter, metallisierte Textilmaterialien, flexible Elektronik und selbstverstärkte Verbundmaterialien.

**Revendications**

1. Film orienté unidirectionnellement comprenant une composition constituée d'un polyester thermoplastique (a) dans une quantité de 85 à 99,9 % en poids, relativement à la composition totale ; un polycarbonate (b) dans une quantité de 0,1 à 15 % en poids, relativement à la composition totale ; et un additif (c) dans une quantité de 0 à 10 % en poids, relativement à la composition totale, le film ayant une largeur d'au moins 0,5 mm et d'au maximum 10 m et une épaisseur de 2 à 2 000 μm.

2. Film orienté unidirectionnellement selon la revendication 1, dans lequel la viscosité intrinsèque du polyester est d'au moins 0,50 dl/g telle que mesurée dans du phénol-1,2-dichlorobenzène, à 25 °C.

3. Film orienté unidirectionnellement selon la revendication 1 ou la revendication 2, dans lequel le polyester thermoplastique est le téréphtalate de polyéthylène, préférablement un homopolymère de téréphtalate de polyéthylène.

4. Film orienté unidirectionnellement selon l'une quelconque des revendications 1 à 3, dans lequel le polycarbonate est formé en faisant réagir du phosgène avec du bisphénol A ou en faisant réagir un carbonate de diaryle et du bisphénol A.

5. Film orienté unidirectionnellement selon l'une quelconque des revendications 1 à 4, comprenant en outre un agent anti-adhésion.

6. Film orienté unidirectionnellement selon la revendication 5, dans lequel l'agent anti-adhésion est un polyéthylène de basse densité linéaire, ou de la silice, ou du sulfate de baryum, ou du carbonate de calcium, ou du dioxyde de titane, et/ou un mélange de ceux-ci.

**7.** Film orienté unidirectionnellement selon l'une quelconque des revendications 1 à 6, comprenant en outre un agent glissant.

**8.** Film orienté unidirectionnellement selon l'une quelconque des revendications 1 à 7, ayant une largeur d'au moins 0,5 mm et d'au maximum 15 mm et une épaisseur d'au moins 5 μm et d'au maximum 300 μm.

**9.** Procédé de fabrication du film selon l'une quelconque des revendications 1 à 8, comprenant les étapes qui consistent à :

(a) extruder une composition constituée de 85 à 99,9 % en poids d'un polyester thermoplastique (a), relativement à la composition totale ; 0,1 à 15 % en poids d'un polycarbonate (b), relativement à la composition totale ; et 0 à 10 % en poids d'additif (c), relativement à la composition totale, pour produire un film fondu ;
(b) refroidir rapidement le film fondu de l'étape (a) pour obtenir un film refroidi rapidement ;
(c) chauffer le film refroidi rapidement de l'étape (b) pour obtenir un film chauffé ; et
(d) étirer le film chauffé de l'étape (c) dans la direction longitudinale pour obtenir un film orienté uniaxialement ; et
(e) thermofixer le film orienté uniaxialement formé à l'étape (d) à une température de 140 à 250 °C ; et optionnellement
(f) collecter le film orienté uniaxialement obtenu à l'étape (e) sur un rouleau.

**10.** Procédé de fabrication du film orienté unidirectionnellement selon la revendication 8 ayant une largeur d'au moins 0,5 mm et d'au maximum 15 mm et une épaisseur d'au moins 5 μm et d'au maximum 300 μm, comprenant les étapes qui consistent à :

(a) extruder une composition constituée de 85 à 99,9 % en poids d'un polyester thermoplastique (a), relativement à la composition totale ; 0,1 à 15 % en poids d'un polycarbonate (b), relativement à la composition totale ; et 0 à 10 % en poids d'additif (c), relativement à la composition totale, pour produire un film fondu et refroidir rapidement ledit film et ;
(b) refendre le film obtenu à l'étape (a) dans la direction longitudinale pour former une pluralité de films ayant une largeur de 2 à 30 mm ;
(c) chauffer puis étirer les films obtenus à l'étape (b) dans la direction longitudinale pour former des films orientés unidirectionnellement ayant une largeur d'au moins 0,5 mm et d'au maximum 15 mm et une épaisseur d'au moins 5 μm et d'au maximum 300 μm ; et
(d) thermofixer les films orientés unidirectionnellement formés à l'étape (c) à une température de 140 à 250 °C ; et optionnellement
(e) collecter les films orientés unidirectionnellement obtenus à l'étape (d) sur des bobines.

**11.** Procédé de fabrication du film orienté unidirectionnellement selon la revendication 8 ayant une largeur d'au moins 0,5 mm et d'au maximum 15 mm et une épaisseur d'au moins 5 μm et d'au maximum 300 μm, comprenant les étapes qui consistent à :

(a) extruder une composition constituée de 85 à 99,9 % en poids d'un polyester thermoplastique (a), relativement à la composition totale ; 0,1 à 15 % en poids d'un polycarbonate (b), relativement à la composition totale ; et 0 à 10 % en poids d'additif (c), relativement à la composition totale, pour produire un film fondu et refroidir rapidement ledit film ;
(b) chauffer puis étirer le film coulé obtenu à l'étape (a) dans la direction longitudinale pour former un film orienté unidirectionnellement ;
(c) refendre le film orienté unidirectionnellement obtenu à l'étape (b) dans la direction longitudinale pour former une pluralité de films orientés unidirectionnellement ayant une largeur de 0,5 mm à au maximum 15 mm et une épaisseur d'au moins 5 μm et d'au maximum 300 μm ;
(d) thermofixer les films orientés unidirectionnellement formés à l'étape (c) à une température de 140 à 250 °C ; et optionnellement
(a) collecter les films orientés unidirectionnellement obtenus à l'étape (d) sur des bobines.

**12.** Procédé de fabrication du film orienté unidirectionnellement selon la revendication 8 ayant une largeur d'au moins 0,5 mm et d'au maximum 15 mm et une épaisseur d'au moins 5 μm et d'au maximum 300 μm, comprenant les étapes qui consistent à :

(a) extruder une composition constituée de 85 à 99,9 % en poids d'un polyester thermoplastique (a), relativement à la composition totale ; 0,1 à 15 % en poids d'un polycarbonate (b), relativement à la composition totale ; et 0 à 10 % en poids d'additif (c), relativement à la composition totale, pour produire un film fondu et refroidir rapidement ledit film ;

(b) chauffer puis étirer le film coulé obtenu à l'étape (a) dans la direction longitudinale pour former un film orienté unidirectionnellement ;

(c) thermofixer le film orienté unidirectionnellement formé à l'étape (b) à une température de 140 à 250 °C ;

(d) refendre le film thermofixé orienté unidirectionnellement obtenu à l'étape (c) dans la direction longitudinale pour former une pluralité de films thermofixés orientés unidirectionnellement ayant une largeur de 0,5 mm à au maximum 15 mm et une épaisseur d'au moins 5 $\mu$m et d'au maximum 300 $\mu$m ; et optionnellement

(e) collecter les films thermofixés orientés unidirectionnellement obtenus à l'étape (d) sur des bobines.

13. Procédé de fabrication de films orientés unidirectionnellement selon l'une quelconque des revendications 1 à 7 ayant une largeur de 0,5 à 2 cm et une épaisseur de plus de 300 $\mu$m et de moins de 2 000 $\mu$m, préférablement inférieure à 900 $\mu$m, comprenant les étapes qui consistent à :

(a) extruder une composition constituée de 85 à 99,9 % en poids d'un polyester thermoplastique (a), relativement à la composition totale ; 0,1 à 15 % en poids d'un polycarbonate (b), relativement à la composition totale ; et 0 à 10 % en poids d'additif (c), relativement à la composition totale, à partir d'une filière à orifices d'extrusion multiples, dans un bain d'eau réfrigérée, pour former de multiples films fondus ayant une largeur de 0,6 à 3 cm ; et

(b) chauffer les films obtenus à l'étape (a) ;

(c) étirer ensuite les films obtenus à l'étape (b) dans la direction longitudinale pour former des films orientés unidirectionnellement ayant une largeur de 0,5 à 2 cm et une épaisseur de plus de 300 $\mu$m et de moins de 2 000 $\mu$m, préférablement inférieure à 900 $\mu$m ; et

(d) thermofixer les films orientés unidirectionnellement formés à l'étape (c) à une température de 140 à 250 °C ; et optionnellement

(e) collecter les films orientés unidirectionnellement formés à l'étape (d) sur des bobines.

14. Utilisation des films selon l'une quelconque des revendications 1 à 8 pour des emballages alimentaires, pour attacher ou lier des cartons, des boîtes, des palettes, et des balles de fibres textiles ; pour tisser des tissus formés de bandes.

15. Tissu tissé formé du film selon la revendication 8.

16. Utilisation du tissu selon la revendication 15 pour des sacs, des grands récipients pour vrac souples (GRVS, sacs grand format), des sacs grand format remplis à chaud pour des matériaux tels que le bitume, des tissus enduits de PVC pour des panneaux flexibles, des envers de tapis, des géotextiles, des filets géotextiles, des tissus métallisés, des composants électroniques flexibles, et des composites auto-renforcés.

**EP 2 791 221 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3627579 A
- US 20080214701 A
- US 4515925 A
- US 3720732 A
- WO 03087200 A1
- WO 03087200 A
- US 6210769 B
- JP 56034428 A
- GB 2425127 A
- JP 61135728 A
- JP 63270760 A
- US 4064112 A
- US 4161578 A
- US 2999835 A
- US 3028365 A
- US 3153008 A

**Non-patent literature cited in the description**

- Encyclopaedia of Polymer Science and Engineering,. John Wiley and Sons, 1988, vol. 12
- **H. A. POHL.** *Anal. Chem.,* 1954, vol. 26, 1614-1616
- Production of polyolefin tapes. **F. HENSEN.** Man-Made Fiber Year Book (CTI). 1992, 45-48
- **F. HENSEN.** Man-Made Fiber Year Book (CTI). 1992, 45-48
- **W. GOERLITZ ; A. ITO.** Substrates for flexible magnetic recording media: The role of base films for modern performance requirements. *Journal of Magnetism and Magnetic Materials,* 1993, vol. 120, 76-82
- **A. RENFRED.** Polyethylene. 1960